# EUROPEAN PATENT APPLICATION

(11) **EP 4 446 048 A1**
(43) Date of publication of application: **16.10.2024**
(21) Application number: 22903911.0
(22) Date of filing: 27.10.2022
(51) Int. Cl.: B23K 31/00

(54) **OFFLINE TEACHING DEVICE AND OFFLINE TEACHING METHOD**

(30) Priority: 08.12.2021 JP 2021199680
(71) Applicant: Panasonic Intellectual Property Management Co., Ltd., Kadoma-shi, Osaka 571-0057 (JP)
(72) Inventor: OKUMA, Katsuaki, Kadoma-shi, Osaka 571-0057 (JP); HIRAYAMA, Masaya, Kadoma-shi, Osaka 571-0057 (JP); OKAZAKI, Yoshiyuki, Kadoma-shi, Osaka 571-0057 (JP)
(74) Representative: Novagraaf International SA
(86) International application number: PCT/JP2022/040275
(87) International publication number: WO 2023/105979

(57) **Abstract**

An offline teaching device includes: an acquisition unit that acquires welding line information indicating welding lines on a workpiece, sensor information indicating a measurement region of a sensor that measures an appearance shape of a bead formed on the workpiece based on the welding, and obstacle information including at least a position of an obstacle disposed between the sensor and the workpiece; a calculation unit that calculates, based on the welding line information, the sensor information, and the obstacle information, an inclusion rate indicating a rate of measurable welding lines in which measurement of the appearance shape is not impossible due to the obstacle during the measurement by the sensor; and an output unit that generates a calculation result of the inclusion rate and outputs the calculation result to a screen.

## Description

### TECHNICAL FIELD

The present disclosure relates to an offline teaching device and an offline teaching method.

### BACKGROUND ART

Patent Literature 1 discloses an offline teaching device that displays, in a model diagram, an operation trajectory of a robot when a teaching program is executed and displays a part of a plurality of position detection commands and a part of a plurality of welding commands. The offline teaching device includes a display unit that displays the teaching program and the model diagram, a storage unit that stores commands constituting the teaching program and model data of the model diagram, and a control unit that controls the display unit and the storage unit. The teaching program includes a position detection program including the plurality of position detection commands and a welding program including the plurality of welding commands. Here, the commands constituting the teaching program, the position detection program, and the welding program are each created by an operator.

### CITATION LIST

### PATENT LITERATURE

Patent Literature 1: WO2016/021130

### SUMMARY OF INVENTION

### TECHNICAL PROBLEM

The present disclosure provides an offline teaching device and an offline teaching method that visualize interference between a scanning region of a sensor performed by a welding robot and an obstacle when the obstacle is disposed in the scanning region and support teaching of an appropriate scanning operation.

### SOLUTION TO PROBLEM

The present disclosure provides an offline teaching device including: an acquisition unit configured to acquire welding line information indicating welding lines on a workpiece on which welding is executed, sensor information indicating a measurement region of a sensor that measures an appearance shape of a bead formed on the workpiece based on the welding, and obstacle information including at least a position of an obstacle disposed between the sensor and the workpiece; a calculation unit configured to calculate an inclusion rate indicating a rate of measurable welding line in which measurement of the appearance shape is not impossible due to the obstacle during the measurement by the sensor, based on the welding line information, the sensor information, and the obstacle information; and an output unit configured to generate a calculation result of the inclusion rate and output the calculation result to a screen.

The present disclosure provides an offline teaching method performed by an offline teaching device including one or more computers. The offline teaching method includes: acquiring welding line information indicating welding lines on a workpiece on which welding is executed, sensor information indicating a measurement region of a sensor that measures an appearance shape of a bead formed on the workpiece based on the welding, and obstacle information including at least a position of an obstacle disposed between the sensor and the workpiece; calculating an inclusion rate indicating a rate of a measurable welding line in which measurement of the appearance shape is not impossible due to the obstacle during the measurement by the sensor, based on the welding line information, the sensor information, and the obstacle information; and generating a calculation result of the inclusion rate and outputting the calculation result to a screen.

The present disclosure provides an offline teaching method performed by an offline teaching device including one or more computers. The offline teaching method includes: inputting welding line information to the computer, the welding line information indicating welding lines on a workpiece on which welding is executed; inputting sensor information to the computer, the sensor information indicating a measurement region of a sensor that measures an appearance shape of a bead formed on the workpiece based on the welding; inputting obstacle information to the computer, the obstacle information including at least a position of an obstacle disposed between the sensor and the workpiece; and generating a calculation result of an inclusion rate indicating a rate of measurable welding lines in which measurement of the appearance shape is not impossible due to the obstacle during the measurement by the sensor, based on the welding line information, the sensor information, and the obstacle information, and outputting the calculation result to a screen.

### ADVANTAGEOUS EFFECTS OF INVENTION

According to the present disclosure, when an obstacle is disposed in a scanning region of a sensor performed by a welding robot, interference between the scanning region and the obstacle can be visualized, and teaching of an appropriate scanning operation can be supported.

### BRIEF DESCRIPTION OF DRAWINGS

[FIG. 1] FIG. 1 is a schematic diagram showing a system configuration example of a welding system according to Embodiment 1.
[FIG. 2] FIG. 2 is a diagram showing an internal configuration example of an inspection control device, a robot control device, a host device, and an offline teaching device according to Embodiment 1.
[FIG. 3] FIG. 3 is a diagram showing an example of an effective scanning region of a sensor.
[FIG. 4] FIG. 4 is a diagram showing an example of an effective scanning region of a sensor when an obstacle is disposed in the effective scanning region of the sensor in FIG. 3.
[FIG. 5] FIG. 5 is a diagram showing a first example of an effective scanning region screen.
[FIG. 6] FIG. 6 is a diagram showing an XY projection plane of the effective scanning region in FIG. 5.
[FIG. 7] FIG. 7 is a diagram showing a second example of the effective scanning region screen.
[FIG. 8] FIG. 8 is a flowchart showing an operation procedure of the offline teaching device according to Embodiment 1.
[FIG. 9A] FIG. 9A is a diagram showing examples of incident light and reflected light when no obstacle exists between a sensor and a workpiece.
[FIG. 9B] FIG. 9B is a diagram showing a first example in which measurement cannot be performed at a position Pt1 of a reflection point when an obstacle exists between the sensor and the workpiece.
[FIG. 9C] FIG. 9C is a diagram showing a second example in which measurement cannot be performed at the position Pt1 of the reflection point when an obstacle exists between the sensor and the workpiece.

### DESCRIPTION OF EMBODIMENTS

### (Background of Present Disclosure)

It is known to create a teaching program for teaching movement, a movement path, or the like of a welding robot using an offline teaching device as in Patent Literature 1. For example, an operator uses a teach pendant to operate teaching work for designating movement or a movement path of a welding robot, and positions an actual welding robot and a workpiece (an object) by visual confirmation to create a teaching program. A method of creating the teaching program has disadvantages such as requiring an operator skilled in an operation of the welding robot and stopping a production facility every time the teaching is corrected. For this reason, in recent years, there is a case where a virtual production facility (for example, a welding robot) is constructed and displayed on a screen using a nearby computer device such as a personal computer which does not have relatively high performance, and offline teaching for teaching movement, a movement path, or the like of the welding robot is performed by an input operation to the computer device by a user.

Recently, automation has become widespread, and an example in which not only a welding operation but also appearance inspection, which is a method of checking quality of a bead formed at a welding part, is automatically performed by a welding robot has appeared. Such an automatic appearance inspection is performed by mounting a device capable of measuring a three-dimensional shape of a laser sensor or the like on a welding robot and three-dimensionally scanning (scanning operation) a laser sensor by the movement of the welding robot.

Here, the teaching of the welding operation is performed while a welding torch is brought close to a workpiece, and an operator visually checks a positional relation between the welding torch and a machining point, which is a welding part. On the other hand, the teaching of the scanning operation is performed using a non-contact type laser sensor disposed at a position separated from the workpiece by a certain degree. Therefore, unlike the teaching of the welding operation, it is difficult for the operator to visually determine whether the positional relation between a portion (inspection portion) to be inspected for appearance and the laser sensor is appropriate. Further, even if the positional relation between the inspection portion and the laser sensor is appropriate, if an obstacle (for example, a jig or a workpiece) is disposed between the inspection portion of the workpiece and the non-contact type laser sensor, the scanning operation may not be performed correctly. In the related art, in order to detect an abnormal situation in which interference occurs between the laser sensor and the inspection portion of the workpiece due to the obstacle, it is necessary to actually perform a scanning operation by the laser sensor and visually check whether there is a loss (for example, an inspection portion which is not inspected) in measurement data acquired by the scanning operation, and there is a problem that the number of work steps increases.

In the following embodiments, an example of an offline teaching device and an offline teaching method that visualize interference between a scanning region of a sensor performed by a welding robot and an obstacle when the obstacle is disposed in the scanning region and support teaching of an appropriate scanning operation will be described.

Hereinafter, embodiments specifically disclosing an offline teaching device and an offline teaching method according to the present disclosure will be described in detail with reference to the drawings as appropriate. However, unnecessarily detailed descriptions may be omitted. For example, the detailed descriptions of well-known matters and the redundant description of substantially the same configuration may be omitted. This is to avoid unnecessary redundancy of the following descriptions and to facilitate understanding of those skilled in the art. The accompanying drawings and the following descriptions are provided for those skilled in the art to fully understand the present disclosure and are not intended to limit the subject matters described in the claims.

### (Definition of Terms)

"Workpiece": an object having a concept of both an object to be welded (for example, metal) and an object produced (manufactured) by welding is defined as a "workpiece". The "workpiece" is not limited to a primary workpiece produced (manufactured) by the welding executed once, and may be a secondary workpiece produced (manufactured) by the welding executed two or more times.
"Welding": a step of producing a workpiece by, for example, joining at least two workpieces to a welding robot is defined as "welding". The "welding" may also be referred to as "main welding".
"Appearance inspection": a step of measuring an appearance shape of a bead formed on a surface of a workpiece produced (manufactured) by welding using a sensor (to be described later) and inspecting whether there is a welding failure is defined as "appearance inspection".

### (Problems caused by Obstacle in Appearance Inspection)

As described in the definition of the appearance inspection, the sensor is usually used in the appearance inspection of the bead formed on the surface of the workpiece produced (manufactured) by welding. The sensor measures, for example, the appearance shape of the bead. In the appearance inspection, it is determined whether there is a welding failure in the workpiece using the measurement result.

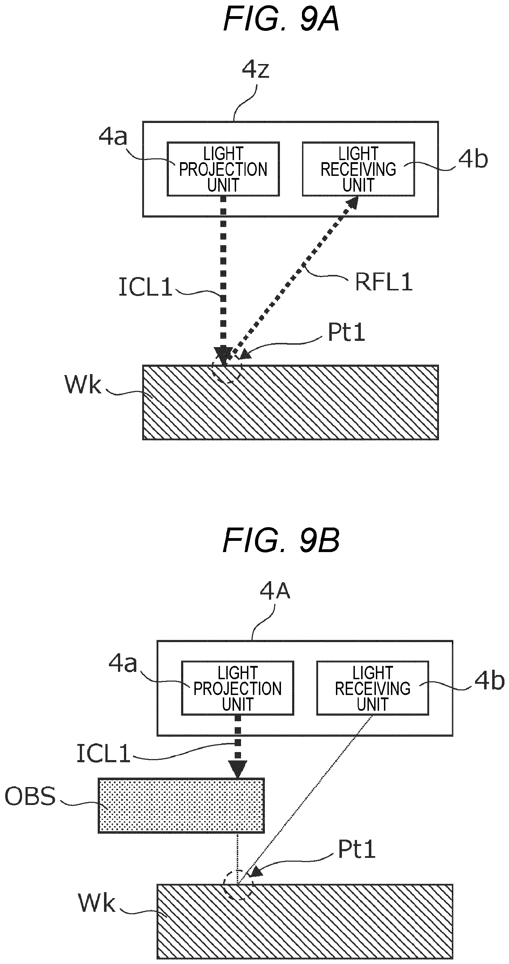

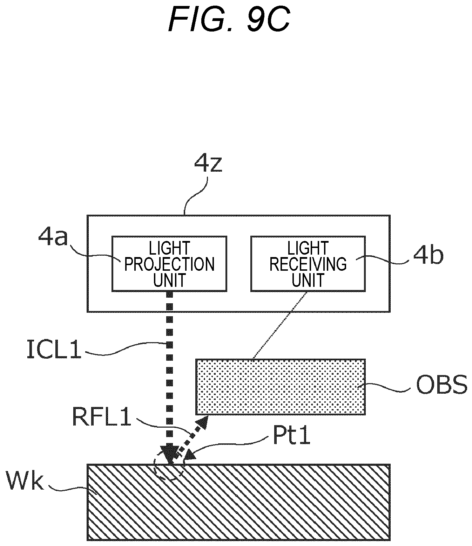

FIG. 9A is a diagram showing examples of incident light ICL1 and reflected light RFL1 when an obstacle OBS does not exist between a sensor 4z and a workpiece Wk. FIG. 9B is a diagram showing a first example in which measurement cannot be performed at a position Pt1 of a reflection point when the obstacle OBS exists between the sensor 4z and the workpiece Wk. FIG. 9C is a diagram showing a second example in which measurement cannot be performed at the position Pt1 of the reflection point when the obstacle OBS exists between the sensor 4z and the workpiece Wk. In FIGS. 9A, 9B, and 9C, to facilitate understanding, the triangulation sensor 4z is described as an example, but a measurement method of the sensor 4z is not limited to the triangulation method (optical system), and may be, for example, a reflection type or a transmission type.

When the triangulation sensor 4z is used, a position of an object is detected by the sensor 4z, for example, based on whether a light beam emitted from a light projection unit of the sensor 4z is incident on a light receiving unit of the sensor 4z. Accordingly, when an obstacle exists on a path (light path) from the light projection unit to the light receiving unit, the sensor 4z cannot correctly detect a position to be measured of the object (workpiece). That is, when the appearance inspection is performed using the triangulation sensor 4z, there is a restriction that an obstacle does not exist in a region that blocks incident light from the sensor 4z and reflected light from the object (workpiece).

As shown in FIG. 9A, when the obstacle OBS does not exist between the sensor 4z and the workpiece Wk, the incident light ICL 1 emitted from a light projection unit 4a of the sensor 4z is reflected at the position Pt1 on a surface of the workpiece Wk, which is the object. The reflected light RFL 1 reflected at the position Pt1 is incident on the light receiving unit 4b of the sensor 4z. Accordingly, in the example of FIG. 9A, the sensor 4z can detect the position Pt1 on the surface of the workpiece Wk.

As shown in FIGS. 9B and 9C, when the obstacle OBS exists on a path of a light beam of the sensor 4z from the light projection unit 4a to the light receiving unit 4b, a region which is a shadow of the light beam due to the obstacle OBS appears as a loss in data which can be measured and acquired by the sensor 4z. In the example of FIG. 9B, the incident light ICL1 emitted from the light projection unit 4a is reflected by the obstacle OBS and is not reflected at the position Pt1 on the surface of the workpiece Wk. Therefore, the position Pt1 is a shadow of the light beam (incident light ICL 1) due to the obstacle OBS, and cannot be detected by the sensor 4z. Similarly, in the example of FIG. 9C, the incident light ICL1 emitted from the light projection unit 4a is reflected at the position Pt1 on the surface of the workpiece Wk, but the reflected light RFL1 is reflected by the obstacle OBS. Therefore, although the position Pt1 is not a shadow of the light beam (incident light ICL 1) due to the obstacle OBS, the reflected light RFL1 cannot be incident on the light receiving unit 4b of the sensor 4z, and as a result, the reflected light RFL 1 cannot be detected by the sensor 4z.

From the above, since a path of the incident light (light beam) emitted from a sensor is defined by a sensor, it is required to geometrically determine whether there is interference between the path and the obstacle OBS. In the following embodiments, an example of an offline teaching device that can teach an appropriate scanning operation by modeling a path of a light beam (in other words, an effective scanning region) and an obstacle and visualizing presence or absence of interference or a degree of interference will be described.

### (Configuration of Welding System)

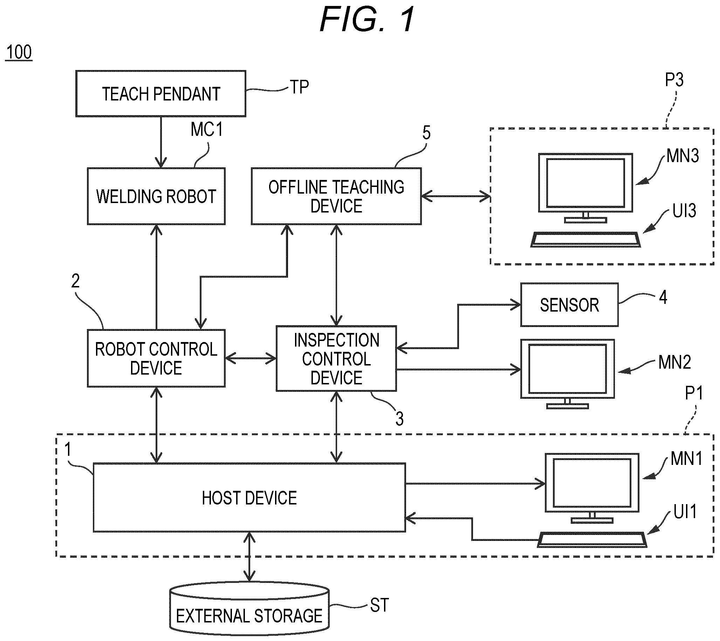

Next, a system configuration of a welding system 100 including an offline teaching device according to the present disclosure will be described with reference to FIG. 1.

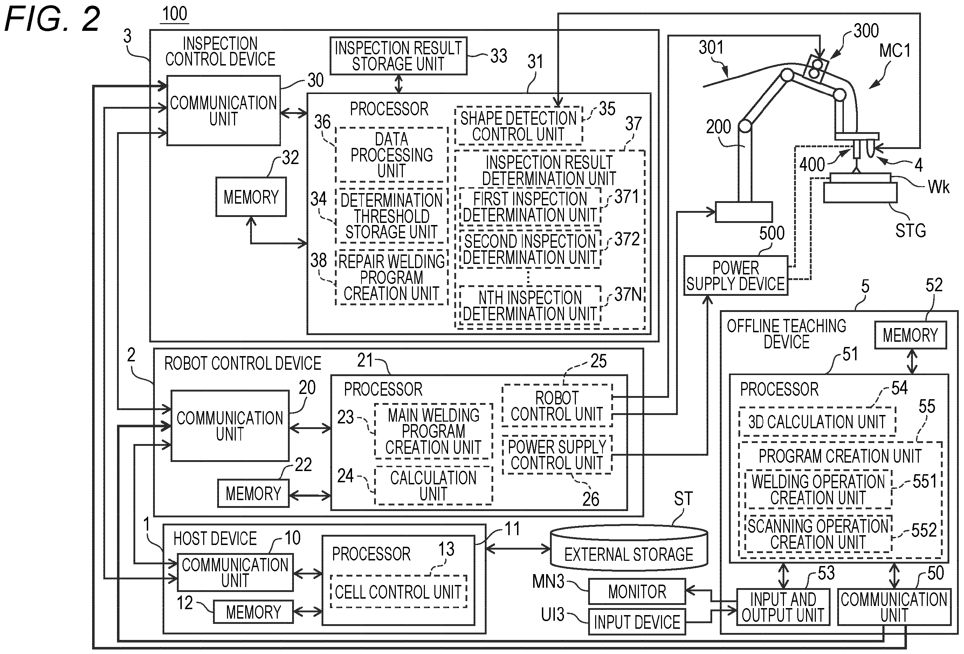

FIG. 1 is a schematic diagram showing a system configuration example of the welding system 100 according to Embodiment 1. The welding system 100 is a configuration including a host device 1 connected to each of an external storage ST, an input interface UI1, and a monitor MN1, a robot control device 2, an inspection control device 3 connected to each of a sensor 4 and a monitor MN2, an offline teaching device 5, and a welding robot MC1. The offline teaching device 5 is connected to each of the monitor MN3 and the input device UI3. In FIG. 1, the sensor 4 is illustrated as a separate body from the welding robot MC1, but may be provided integrally with the welding robot MC1 (see FIG. 2). The monitor MN2 is not an essential component and may be omitted.

The host device 1 collectively controls the start and completion of welding executed by the welding robot MC1 via the robot control device 2. For example, the host device 1 reads out, from the external storage ST, welding-related information input or set in advance by a user (for example, who is a welding operator or a system administrator. The same applies hereinafter.), generates execution commands of various processes of welding including contents of the welding-related information by using the welding-related information, and transmits the execution commands to the corresponding robot control device 2. When the welding executed by the welding robot MC1 is completed, the host device 1 receives, from the robot control device 2, a welding completion report indicating that the welding executed by the welding robot MC1 is completed, updates to a status indicating that the corresponding welding is completed, and records the status in the external storage ST.

The welding execution command described above is not limited to being generated by the host device 1, and may be generated by, for example, an operation panel of a facility (for example, a programmable logic controller (PLC)) in a factory or the like where the welding is executed, or an operation panel (for example, teach pendant) of the robot control device 2. The teach pendant is a device for operating the welding robot MC1 connected to the robot control device 2.

The host device 1 collectively controls the start and completion of bead appearance inspection using the robot control device 2, the inspection control device 3, and the sensor 4. For example, upon receiving the welding completion report from the robot control device 2, the host device 1 generates a bead appearance inspection execution command of a workpiece produced by the welding robot MC1 and transmits the execution command to each of the robot control device 2 and the inspection control device 3. When the bead appearance inspection is completed, the host device 1 receives, from the inspection control device 3, an appearance inspection report indicating that the bead appearance inspection is completed, updates to a status indicating that the corresponding bead appearance inspection is completed, and records the status in the external storage ST.

Here, the welding-related information is information indicating contents of the welding executed by the welding robot MC1, and is created in advance for each step of the welding and is registered in the external storage ST. The welding-related information includes, for example, the number of workpieces to be used for welding, workpiece information including an ID of the workpiece to be used for welding, lot information of the workpiece, a name, and a welding part (for example, information on a welding line and position information of the welding line), an execution scheduled date on which welding is executed, the number of workpieces to be produced, and various welding conditions at the time of welding. The welding-related information is not limited to the data on the items described above, and may further include information such as a welding operation teaching program and a scanning operation teaching program that have already been created (refer to the following description), and welding operation setting information, scanning operation setting information, and the like used to create the teaching programs.

The welding conditions include, for example, a material and a thickness of the workpiece, a material and a wire diameter of a welding wire 301, a type of shielding gas, a flow ratio of shielding gas, a set average value of welding current, a set average value of a welding voltage, a feeding speed and a feeding amount of the welding wire 301, the number of times of welding, and welding time. In addition to these, for example, information indicating the type of welding (for example, TIG welding, MAG welding, or pulse welding), and the moving speed and the moving time of the manipulator 200 may be included.

The robot control device 2 causes the welding robot MC1 to start welding using the workpiece designated by the execution command based on the execution command of welding transmitted from the host device 1. The welding-related information described above is not limited to being managed by the host device 1 with reference to the external storage ST, and may be managed by, for example, the robot control device 2. In this case, since the robot control device 2 can know a state in which the welding is completed, an actual execution date may be managed instead of the scheduled execution date, on which a welding step is scheduled to be executed, in the welding-related information. Although a type of the welding is not limited in the present specification, in order to make the description easy to understand, a step of joining a plurality of workpieces to produce one workpiece will be described as an example.

The host device 1 is separately connected to the monitor MN1, the input interface UI1, and the external storage ST so as to allow data input to and output from therebetween, and is further connected to the robot control device 2 so as to allow data communication therebetween. The host device 1 may be a terminal device P1 that integrally includes the monitor MN1 and the input interface UI1, and may further integrally include the external storage ST. In this case, the terminal device P1 is a personal computer (PC) that is used by the user before the welding is executed. The terminal device P1 is not limited to the PC described above, and may be a computer device having a communication function, such as a smartphone or a tablet terminal.

The monitor MN1 may be formed using a display device such as a liquid crystal display (LCD) or an organic electroluminescence (EL). The monitor MN1 may display, for example, a screen showing a notification indicating that the welding is completed or a notification indicating that the bead appearance inspection is completed, which is output from the host device 1. In addition, a speaker (not illustrated) may be connected to the host device 1 instead of the monitor MN1 or together with the monitor MN1, and the host device 1 may output, via the speaker, a sound of a content indicating that the welding is completed or a content indicating that the bead appearance inspection is completed.

The input interface UI1 is a user interface that detects an input operation of the user and outputs the input operation to the host device 1, and may be formed using, for example, a mouse, a keyboard, or a touch panel. The input interface UI1 receives, for example, an input operation when the user creates the welding-related information or an input operation when the welding execution command is transmitted to the robot control device 2.

The external storage ST is formed using, for example, a hard disk drive or a solid state drive. The external storage ST stores, for example, data of the welding-related information created for each welding, a status (a production status) of a workpiece Wk produced by the welding, and workpiece information on the workpiece Wk (see above). The external storage ST may store, for each welding line, a welding operation teaching program and a scanning operation teaching program that are created by the offline teaching device 5. The welding operation teaching program and the scanning operation teaching program will be described later.

The robot control device 2 is connected to the host device 1, the inspection control device 3, and the offline teaching device 5 so as to allow data communication therebetween, and is connected to the welding robot MC1 so as to allow data communication therebetween. Upon receiving the welding execution command transmitted from the host device 1, the robot control device 2 creates a welding program based on the welding operation teaching program corresponding to the execution command, and controls the welding robot MC1 to execute the welding. When the completion of the welding is detected, the robot control device 2 generates a welding completion report indicating that the welding is completed, and notifies the host device 1 of the welding completion report. Accordingly, the host device 1 can appropriately detect the completion of the welding by the robot control device 2. A method of detecting the completion of the welding by the robot control device 2 may be, for example, a method of determining completion of the welding based on a signal indicating the completion of the welding from a sensor (not illustrated) provided in a wire feeding device 300, or may be a known method, and contents of the method of detecting the completion of the welding are not limited.

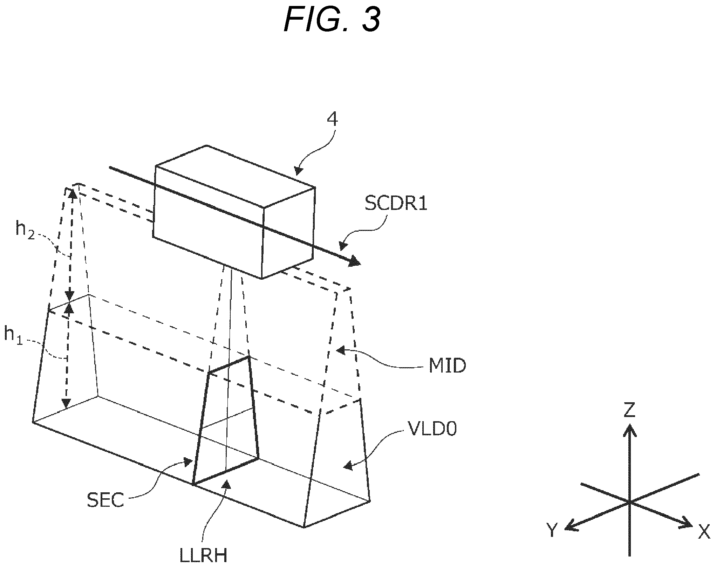

The welding robot MC1 is connected to the robot control device 2 so as to allow data communication therebetween. The welding robot MC1 executes the welding commanded from the host device 1 under control of the corresponding robot control device 2. In addition, the welding robot MC1 moves the sensor 4 based on the scanning operation teaching program (see FIG. 3), thereby executing the bead appearance inspection commanded from the host device 1.

The inspection control device 3 is connected to the host device 1, the robot control device 2, the sensor 4, and the offline teaching device 5 so as to allow data communication therebetween. Upon receiving the bead appearance inspection execution command transmitted from the host device 1, the inspection control device 3 executes, in cooperation with the sensor 4, the bead appearance inspection on a bead formed on a welding part of the workpiece Wk produced by the welding robot MC1 (for example, inspection on whether a bead formed on a workpiece satisfies a predetermined welding standard) in accordance with the scanning operation teaching program for the corresponding workpiece Wk. As a result of the scanning operation, the inspection control device 3 uses input data (for example, point cloud data capable of specifying a three-dimensional shape of the bead) related to a shape of the bead acquired by the sensor 4 to execute the bead appearance inspection based on comparison between the input data related to the shape of the weld bead and master data of a non-defective workpiece predetermined for each workpiece. The bead appearance inspection executed by the welding robot MC1 is not limited to the appearance inspection on the bead, and may be an inspection including the appearance inspection on the bead and another appearance inspection (for example, presence or absence of a component attached to the workpiece Wk). Accordingly, the operator can more efficiently utilize the effective scanning region of the sensor 4 and simultaneously perform the appearance inspections having different purposes based on an appearance inspection result. In addition, the effective scanning region referred to herein, which will be described later with reference to FIG. 3, indicates a three-dimensional region in which the sensor 4 can read an appearance shape by scanning.

The inspection control device 3 executes the bead appearance inspection, generates an appearance inspection report including an inspection determination result of the bead appearance inspection and a notification indicating that the bead appearance inspection is completed, transmits the appearance inspection report to the host device 1, and outputs the appearance inspection report to the monitor MN2. When the inspection control device 3 determines that a defect is detected in the bead appearance inspection of the workpiece, the inspection control device 3 generates an appearance inspection report including an appearance inspection result including information on a defective section for repair welding of the defect, and transmits the appearance inspection report to the host device 1 and the robot control device 2. In addition, when the inspection control device 3 determines that a defect is detected by the bead appearance inspection of the workpiece, the inspection control device 3 creates, by using the appearance inspection result including the information on the defective section, a repair welding program for executing correction such as repair on a defective portion. The inspection control device 3 transmits, to the host device 1 or the robot control device 2, the repair welding program and the appearance inspection result in association with each other.

The sensor 4 is connected to the inspection control device 3 so as to allow data communication therebetween. The sensor 4 is attached and fixed to, for example, the welding robot MC1, and executes three-dimensional scanning of the workpiece Wk or a stage STG (see FIG. 2) on which the workpiece Wk is placed in accordance with driving of the manipulator 200 based on control of the robot control device 2. The sensor 4 acquires data of a three-dimensional shape of the workpiece Wk placed on the stage STG or data of a three-dimensional shape (for example, point cloud data) capable of specifying a shape, a size, a position, and the like of the stage STG on which the workpiece Wk is placed in accordance with the driving of the manipulator 200 based on the control of the robot control device 2, and transmits the data of the three-dimensional shape to the inspection control device 3.

The monitor MN2 may be formed using a display device such as an LED or an organic EL. The monitor MN2 displays, for example, a screen showing a notification indicating that the bead appearance inspection is completed or the notification and a bead appearance inspection result, which are output from the inspection control device 3. In addition, a speaker (not shown) may be connected to the inspection control device 3 instead of the monitor MN2 or together with the monitor MN2, and the inspection control device 3 may output, via the speaker, a sound indicating a content of the notification indicating that the appearance inspection is completed or the notification and the result of the bead appearance inspection.

The offline teaching device 5 is connected to the robot control device 2, the inspection control device 3, the monitor MN3, and the input device UI3 so as to allow data communication therebetween. The offline teaching device 5 stores, as setting information, the position information of the welding line for each workpiece Wk for which a teaching program is to be created or has been created. The offline teaching device 5 constructs an environment of a virtual production facility (for example, a virtual welding robot, a virtual workpiece, or a virtual stage) that is different from an actual welding environment and a coordinate system, and creates a welding operation teaching program and a scanning operation teaching program for the workpiece Wk based on a control command and various kinds of data transmitted from the input device UI3, various kinds of data output from the robot control device 2 or the inspection control device 3 (for example, input data related to a shape of a bead or the workpiece Wk, data of a reference 3D model that can be measured by the sensor 4 when the obstacle OBS is not disposed, position information of a welding line, and the like), or the like. The offline teaching device 5 transmits the created welding operation teaching program and scanning operation teaching program to the robot control device 2. The created scanning operation teaching program may be transmitted not only to the robot control device 2 but also to the inspection control device 3. In addition, the offline teaching device 5 stores the created welding operation teaching program and scanning operation teaching program for each workpiece Wk to be welded.

Here, the position information of the welding line is information indicating a position of a welding line formed in the workpiece Wk.

Here, the welding operation teaching program is a program that is created based on the welding line and that causes the welding robot MC1 to execute the welding. The welding operation teaching program is created including information on a position, a distance, and an angle (posture) of a welding torch 400 for executing various operations (for example, approach, retraction, avoidance, and welding) for subjecting the welding to the workpiece Wk using the welding torch 400, and information on welding conditions and the like.

In addition, the scanning operation teaching program referred to herein is a program that is created based on the welding line and that causes the welding robot MC 1 to execute the appearance inspection on at least one bead or the workpiece Wk created by the welding. The scanning operation teaching program is created including information on a position, a distance, and an angle (posture) of the sensor 4 for executing various operations (for example, approach, retraction, avoidance, and scanning) for executing the appearance inspection on the created bead, the workpiece Wk, and the like using the sensor 4.

The monitor MN3 may be formed using a display device such as an LCD or an organic EL. The monitor MN3 displays images of the virtual production facility (for example, a virtual welding robot, a virtual workpiece, and a virtual stage) transmitted from the offline teaching device 5 and the coordinate system, and displays an operation trajectory of the welding torch 400 based on the welding operation teaching program, an operation trajectory of the sensor 4 based on the scanning operation teaching program, and the like. In addition, the monitor MN3 displays an image in which the operation trajectory of the sensor 4 or the operation trajectory of the welding torch 400 is superimposed on the image of the virtual production facility transmitted from the offline teaching device 5.

The input device UI3 is a user interface that detects an input operation of the user and outputs the input operation to the host device 1, and may be formed using, for example, a mouse, a keyboard, or a touch panel. The input device UI3 receives input operations of welding line position information, welding setting information, scanning setting information, a 3D model, and the like of the workpiece Wk used for creating the scanning operation teaching program and the welding operation teaching program, input operations of the created scanning operation teaching program and welding operation teaching program, and the like. Here, the monitor MN3 and the input device UI3 as referred herein may be an integrally formed terminal device P3 (for example, a PC, a notebook PC, or a tablet terminal).

FIG. 2 is a diagram showing an internal configuration example of the inspection control device 3, the robot control device 2, the host device 1, and the offline teaching device 5 according to Embodiment 1. In order to make the description easy to understand, illustration of the monitor MN1 and MN2 and the input interface UI1 is omitted in FIG. 2. The workpiece Wk shown in FIG. 2 is a workpiece to be subjected to the bead appearance inspection. The workpiece Wk may be a workpiece produced by the welding, or a repaired workpiece that has been repaired one or more times by repair welding. In addition, although the welding robot MC1 shown in FIG. 2 is a configuration including the sensor 4, the sensor 4 may be included in another robot (for example, an inspection robot for executing the appearance inspection or a repair welding robot for executing the repair welding).

Under the control of the robot control device 2, the welding robot MC 1 executes a welding step based on the welding operation teaching program using the welding torch 400, a bead appearance inspection step based on the scanning operation teaching program using the sensor 4, and the like. In addition, the welding robot MC1 may scan an appearance of the workpiece Wk using the sensor 4 in order to acquire the position information of the bead formed on the workpiece Wk and an appearance shape of the workpiece Wk used to create the welding operation teaching program and the scanning operation teaching program. The welding robot MC1 executes, for example, arc welding in the welding step. The welding robot MC1 may execute welding (for example, laser welding and gas welding) other than the arc welding. In this case, although not illustrated, a laser head, instead of the welding torch 400, may be connected to a laser oscillator via an optical fiber. The welding robot MC1 is a configuration including at least the manipulator 200, the wire feeding device 300, the welding wire 301, and the welding torch 400.

The manipulator 200 includes an articulated arm, and moves each arm based on a control signal from a robot control unit 25 of the robot control device 2. Accordingly, the manipulator 200 can change a positional relation (for example, an angle of the welding torch 400 relative to the workpiece Wk) between the workpiece Wk and the welding torch 400 and a positional relation between the workpiece Wk and the sensor 4 by driving the arm.

The wire feeding device 300 controls the feeding speed of the welding wire 301 based on the control signal transmitted from the robot control device 2. The wire feeding device 300 may include a sensor (not shown) that can detect a remaining amount of the welding wire 301. Based on an output of the sensor, the robot control device 2 can detect that the welding step is completed.

The welding wire 301 is held by the welding torch 400. When electric power is supplied from a power supply device 500 to the welding torch 400, an arc is generated between a distal end of the welding wire 301 and the workpiece Wk, and the arc welding is executed. Illustration and description of a configuration and the like for supplying shielding gas to the welding torch 400 are omitted for the convenience of description.

The host device 1 generates execution commands for various steps of the welding or the bead appearance inspection by using the welding-related information input or set in advance by the user, and transmits the execution commands to the robot control device 2. As described above, when the sensor 4 is integrally attached to the welding robot MC1, the bead appearance inspection execution command is transmitted to both the robot control device 2 and the inspection control device 3. The host device 1 includes at least a communication unit 10, a processor 11, and a memory 12.

The communication unit 10 is separately connected to the robot control device 2 and the external storage ST so as to allow data communication therebetween. The communication unit 10 transmits, to the robot control device 2, the execution commands for various steps of the welding or the bead appearance inspection generated by the processor 11. The communication unit 10 receives the welding completion report and the appearance inspection report that are transmitted from the robot control device 2, and outputs the welding completion report and the appearance inspection report to the processor 11. The welding execution command may include, for example, a control signal for controlling each of the manipulator 200, the wire feeding device 300, and the power supply device 500 that are included in the welding robot MC1.

The processor 11 is formed by using, for example, a central processing unit (CPU) or a field programmable gate array (FPGA), and executes various processes and controls in cooperation with the memory 12. Specifically, the processor 11 implements functions of a cell control unit 13 by referring to a program stored in the memory 12 and executing the program.

The memory 12 includes, for example, a random access memory (RAM) as a work memory used when a process of the processor 11 is executed, and a read only memory (ROM) that stores a program defining the process of the processor 11. Data generated or acquired by the processor 11 is temporarily stored in the RAM. The program that defines the process of the processor 11 is written into the ROM. In addition, the memory 12 separately stores the data of the welding-related information read out from the external storage ST, the status of the workpiece, and data of the workpiece information of the workpiece Wk (see below) transmitted from the robot control device 2.

The cell control unit 13 generates, based on the welding-related information stored in the external storage ST, an execution command for executing the welding, the bead appearance inspection on the workpiece Wk, appearance scanning of the workpiece Wk, or the repair welding. In addition, the cell control unit 13 creates a welding program at the time of welding, an appearance inspection program related to driving of the welding robot MC1 at the time of bead appearance inspection on the workpiece Wk, or an appearance scanning program related to driving of the welding robot MC1 at the time of appearance scanning based on the welding-related information stored in the external storage ST and the welding operation teaching program and the scanning operation teaching program that are created by the offline teaching device 5 and transmitted from the robot control device 2. Further, the cell control unit 13 creates an execution command for the created programs. The appearance inspection program and the appearance scanning program may be created for each workpiece Wk in advance and stored in the external storage ST. In this case, the cell control unit 13 reads out and acquires various programs from the external storage ST. The cell control unit 13 may generate different execution commands for various steps of the main welding to be executed by the welding robot MC 1. The execution commands for the welding appearance inspection and the appearance scanning that are generated by the cell control unit 13 are transmitted to the corresponding robot control device 2 or each of the robot control device 2 and the inspection control device 3 via the communication unit 10.

The robot control device 2 refers to a corresponding program based on the execution command for the welding, the bead appearance inspection, or the appearance scanning that are transmitted from the host device 1. The robot control device 2 controls the welding robot MC 1 (for example, the sensor 4, the manipulator 200, the wire feeding device 300, and the power supply device 500) based on the referred program. The robot control device 2 is a configuration including at least a communication unit 20, a processor 21, and a memory 22.

The communication unit 20 is connected to the host device 1, the inspection control device 3, the welding robot MC1, and the offline teaching device 5 so as to allow data communication therebetween. Although illustration is simplified in FIG. 2, data is transmitted and received between the robot control unit 25 and the manipulator 200, between the robot control unit 25 and the wire feeding device 300, and between a power supply control unit 26 and the power supply device 500 via the communication unit 20. The communication unit 20 receives the execution command for the welding or the bead appearance inspection transmitted from the host device 1. The communication unit 20 receives the position information of the welding line, the welding operation teaching program, and the scanning operation teaching program that are transmitted from the offline teaching device 5. The communication unit 20 transmits the workpiece information of the workpiece Wk produced by the welding to the host device 1.

Here, the workpiece information not only includes an ID of the workpiece Wk but also includes at least an ID, a name, and a welding part of a workpiece used in the welding, and a welding condition at the time of executing the welding.

The processor 21 is formed using, for example, a CPU or an FPGA, and executes various processes and controls in cooperation with the memory 22. Specifically, the processor 21 implements functions of a main welding program creation unit 23, the robot control unit 25, and the power supply control unit 26 by referring to a program stored in the memory 22 and executing the program. In addition, the processor 21 executes, based on a welding program generated by the main welding program creation unit 23, calculation on a parameter for controlling the welding robot MC1 (specifically, each of the manipulator 200, the wire feeding device 300, and the power supply device 500) controlled by the robot control unit 25.

The memory 22 includes, for example, a RAM as a work memory used when a process of the processor 21 is executed, and a ROM that stores a program defining the process of the processor 21. Data generated or acquired by the processor 21 is temporarily stored in the RAM. The program defining the process of the processor 21 is written into the ROM. In addition, the memory 22 stores data of the execution command for the welding or the bead appearance inspection transmitted from the host device 1, and the welding-related information in which the workpiece information of the workpiece Wk produced by the welding and the position information of the welding line are associated with each other. The welding-related information including the workpiece information of the workpiece Wk to which the welding operation teaching program and the scanning operation teaching program are transmitted from the offline teaching device 5 may include the welding operation teaching program and the scanning operation teaching program, position information of a welding line used to create the welding operation teaching program and the scanning operation teaching program, the welding operation setting information, and the scanning operation setting information.

The main welding program creation unit 23 creates a welding program for the welding to be executed by the welding robot MC1, based on the welding execution command transmitted from the host device 1 via the communication unit 20, by using the workpiece information on each of the plurality of workpieces included in the execution command (for example, an ID, a name, and a workpiece coordinate system of a workpiece, information on a workpiece, and welding line position information) and the welding operation teaching program associated with the workpiece information. The welding program may include various parameters such as a welding current, a welding voltage, an offset amount, a welding speed, and a posture of the welding torch 400 for controlling the power supply device 500, the manipulator 200, the wire feeding device 300, the welding torch 400, and the like during the execution of the welding. The welding program may be stored in the processor 21 or may be stored in the RAM of the memory 22.

The calculation unit 24 performs various calculations. For example, the calculation unit 24 executes, based on the welding program generated by the main welding program creation unit 23, calculation on a parameter or the like for controlling the welding robot MC 1 (specifically, each of the manipulator 200, the wire feeding device 300, and the power supply device 500) controlled by the robot control unit 25.

The robot control unit 25 generates a control signal for driving the welding robot MC1 (specifically, each of the sensor 4, the manipulator 200, the wire feeding device 300, and the power supply device 500) based on the welding program generated by the main welding program creation unit 23. The robot control unit 25 transmits the generated control signal to the welding robot MC 1.

In addition, the robot control unit 25 drives each of the manipulator 200 and the sensor 4 of the welding robot MC1 based on the appearance inspection program created using the scanning operation teaching program. Accordingly, the sensor 4 attached to the welding robot MC1 can move along with the operation of the welding robot MC1, scan the bead of the workpiece Wk to acquire input data related to the shape of the bead (for example, point cloud data capable of specifying the three-dimensional shape of the bead), and partially scan the workpiece Wk to acquire input data related to a partial shape of the workpiece Wk corresponding to other appearance inspection portions (for example, point cloud data capable of specifying the three-dimensional shape of the workpiece Wk corresponding to the other appearance inspection portions).

The power supply control unit 26 drives the power supply device 500 based on a calculation result of the welding program generated by the main welding program creation unit 23.

The inspection control device 3 controls, based on the bead appearance inspection execution command transmitted from the host device 1, a process of the bead appearance inspection on the workpiece Wk produced by the welding executed by the welding robot MC1 or the workpiece Wk which is a repaired workpiece repaired by the repair welding executed one or more times. The bead appearance inspection is, for example, an inspection of whether a bead formed on the surface of the workpiece Wk satisfies a predetermined welding standard (for example, a welding quality standard required by each user), and is formed by the inspection determination described above. That is, the bead appearance inspection is performed to determine whether there is a welding failure on the workpiece Wk. The inspection control device 3 determines (inspects) whether an appearance shape of the bead formed in the workpiece Wk satisfies the predetermined welding standard based on the input data (for example, point cloud data capable of specifying a three-dimensional shape of the bead) related to the shape of the bead acquired by the sensor 4. Further, the inspection control device 3 transmits, to the offline teaching device 5, input data related to the shape of the bead or the workpiece Wk acquired by driving (moving) the sensor 4 by the welding robot MC 1. The inspection control device 3 includes at least a communication unit 30, a processor 31, a memory 32, and an inspection result storage unit 33.

The communication unit 30 is connected to the host device 1, the robot control device 2, the sensor 4, and the offline teaching device 5 so as to allow data communication therebetween. Although illustration is simplified in FIG. 2, data is transmitted and received between a shape detection control unit 35 and the sensor 4 via the communication unit 30. The communication unit 30 receives the bead appearance inspection execution command transmitted from the host device 1. The communication unit 30 transmits an inspection determination result of the bead appearance inspection using the sensor 4 to the host device 1, and transmits three-dimensional shape data of the bead acquired by the sensor 4 to the offline teaching device 5.

The processor 31 is formed using, for example, a CPU or an FPGA, and executes various processes and controls in cooperation with the memory 32. Specifically, the processor 31 functionally implements a determination threshold storage unit 34, the shape detection control unit 35, a data processing unit 36, an inspection result determination unit 37, and a repair welding program creation unit 38 by referring to a program stored in the memory 32 and executing the program.

The memory 32 includes, for example, a RAM serving as a work memory used when a process of the processor 31 is executed, and a ROM that stores a program defining the process of the processor 31. Data generated or acquired by the processor 31 is temporarily stored in the RAM. The program defining the processing of the processor 31 is written into the ROM. In addition, the memory 32 may store the scanning operation teaching program transmitted from the offline teaching device 5 and the workpiece information in association with each other.

The inspection result storage unit 33 is formed using, for example, a hard disk or a solid state drive. The inspection result storage unit 33 stores data indicating a result of the bead appearance inspection on the welding part of the workpiece Wk (for example, a workpiece or a repair workpiece) as an example of the data generated or acquired by the processor 31. The data indicating the result of the bead appearance inspection is generated by, for example, the inspection result determination unit 37 (specifically, any of a first inspection determination unit 371, a second inspection determination unit 372 to an Nth inspection determination unit 37N included in the inspection result determination unit 37).

The determination threshold storage unit 34 is formed by, for example, a cache memory provided in the processor 31, is set in advance by a user operation, and stores information on thresholds (for example, a threshold set for each type of welding failure) corresponding to the welding part and the bead appearance inspection process of each of the first inspection determination unit 371, ..., the Nth inspection determination unit 37N included in the inspection result determination unit 37. The thresholds are, for example, an allowable range of a positional deviation of the bead, thresholds of a length, a height, and a width of the bead, and thresholds of a perforation, a pit, an undercut, and a sputtering. The determination threshold storage unit 34 may store, as the thresholds during the bead appearance inspection after repair welding, an allowable range that satisfies a minimum welding standard (quality) required by a customer or the like (for example, a minimum allowable value or a maximum allowable value). The thresholds are used in a process of determining whether inspection results created by the first inspection determination unit 371 and the second inspection determination unit 372 to the Nth inspection determination unit 37N included in the inspection result determination unit 37 are acceptable for the bead appearance inspection. Further, the determination threshold storage unit 34 may store an upper limit value of the number of times of bead appearance inspections for each welding part. Accordingly, when the number of times at the time of correcting a defective portion by the repair welding exceeds a predetermined upper limit value of the number of times, the inspection control device 3 determines that the correction on the defective portion by automatic repair welding by the welding robot MC1 is difficult or impossible, and can prevent a decrease in an operation rate of the welding system 100.

The shape detection control unit 35 acquires input data (for example, point cloud data capable of specifying the three-dimensional shape of the bead) related to the shape of the bead acquired and transmitted by the sensor 4 based on the bead appearance inspection execution command for the welding part of the workpiece Wk (for example, the workpiece or the repair workpiece) transmitted from the host device 1. In addition, the shape detection control unit 35 acquires the input data (for example, point cloud data capable of specifying the three-dimensional shape of the workpiece Wk) related to the shape of the workpiece Wk acquired and transmitted by the sensor 4 based on the appearance scanning execution command for the workpiece Wk transmitted from the host device 1. Specifically, when the sensor 4 reaches a position where the bead or the workpiece Wk can be imaged (in other words, the three-dimensional shape of the welding part or the workpiece Wk can be detected) in accordance with the driving of the manipulator 200 by the robot control device 2 described above, the shape detection control unit 35 causes the sensor 4 to emit, for example, a laser beam to acquire the input data related to the shape of the bead or the workpiece Wk. Upon receiving the input data (see above) acquired by the sensor 4, the shape detection control unit 35 transmits the input data to the data processing unit 36.

When the input data (see description above) related to the shape of the bead is received from the shape detection control unit 35, the data processing unit 36 converts the input data into a data format suitable for first inspection determination by the inspection result determination unit 37, and converts the input data into a data format suitable for each of second inspection determination, ..., Nth inspection determination by the inspection result determination unit 37. The conversion of the data format may include correction processing of removing unnecessary point cloud data (for example, noise) included in the input data (that is, point cloud data) as so-called preprocessing, and the above preprocessing may be omitted for the first inspection determination. The data processing unit 36 generates image data indicating the three-dimensional shape of the bead by setting a data format suitable for the first inspection determination and executing a statistical process on the input shape data, for example. The data processing unit 36 may perform edge enhancement correction in which a peripheral portion of the bead is enhanced in order to enhance the position and the shape of the bead as data for the first inspection determination. The data processing unit 36 may count the number of times the bead appearance inspection is executed for each welding failure portion, and determine that it is difficult or impossible to correct the welding failure portion by automatic repair welding in a case where a welding inspection result is not favorable even when the number of times of the bead appearance inspection exceeds the number of times stored in advance in the memory 32. In this case, the inspection result determination unit 37 generates an alert screen including a position of the welding failure portion and a type of the welding failure (for example, a perforation, a pit, an undercut, a sputtering, or a protrusion), and transmits the generated alert screen to the host device 1 via the communication unit 30. The alert screen transmitted to the host device 1 is displayed on the monitor MN1. The alert screen may be displayed on the monitor MN2.

The data processing unit 36 uses the threshold for bead appearance inspection stored in the determination threshold storage unit 34 to execute the bead appearance inspection based on comparison between the input data related to the shape of the bead acquired by the sensor 4 and the master data of a non-defective workpiece predetermined for each workpiece. The data processing unit 36 creates an appearance inspection report including a defect determination result as an inspection determination result (that is, information indicating presence or absence of a defect that requires repair welding) and information regarding a defective section for each defective portion and stores the appearance inspection report in the inspection result storage unit 33, and transmits the appearance inspection report to the host device 1 or the robot control device 2 via the communication unit 30. When the data processing unit 36 determines that there is no defective portion that requires repair welding in the workpiece Wk to be inspected, the data processing unit 36 creates an appearance inspection report including an inspection determination result indicating that the inspection result passes the bead appearance inspection and stores the appearance inspection report in the inspection result storage unit 33, and transmits the appearance inspection report to the host device 1 via the communication unit 30.

In addition, when the input data (see description above) related to the shape of the workpiece Wk is acquired from the shape detection control unit 35, the data processing unit 36 converts the input data into a data format suitable for the calculation process executed by the offline teaching device 5. The conversion of the data format may include, as a so-called preprocess, a correction process of removing unnecessary point cloud data (for example, noise) included in the input data (that is, point cloud data), or may be a process of generating a 3D model of the workpiece Wk or the effective scanning region of the sensor 4. In addition, the data processing unit 36 may execute edge enhancement correction in which the position and the shape of the workpiece Wk are enhanced and the peripheral portion of the workpiece Wk is enhanced. The data processing unit 36 transmits the input data related to the shape of the workpiece Wk after conversion to the offline teaching device 5 via the communication unit 30.

The inspection result determination unit 37 may execute a total of N (N is an integer of 2 or more) types of bead appearance inspection (for example, each of the first inspection determination and the second inspection determination described above). Specifically, the inspection result determination unit 37 includes the first inspection determination unit 371 and the second inspection determination unit 372 to the Nth inspection determination unit 37N. Although the description will be made assuming that N = 2 in order to facilitate understanding of the description in FIG. 2, the same applies to an integer of N = 3 or more.

The first inspection determination unit 371 executes the first inspection determination (that is, the bead appearance inspection based on comparison between the input data related to the shape of the bead acquired by the sensor 4 and the master data of the non-defective workpiece predetermined for each workpiece), and inspects shape reliability of the bead (for example, whether the weld bead is along a straight or curved welding line), a bead crack, and a bead positional deviation. The first inspection determination unit 371 executes comparison (so-called image process) between the master data of the non-defective workpiece and the data (for example, image data generated based on the point cloud data) subjected to the data conversion by the data processing unit 36 for the first inspection determination. Therefore, the first inspection determination unit 371 can inspect the shape reliability of the bead, the bead crack, and the bead positional deviation with high accuracy. The first inspection determination unit 371 calculates an inspection score indicating an inspection result of the shape reliability of the bead, the bead crack, and the bead positional deviation, and creates a calculated value of the inspection score as a first inspection result. Further, the first inspection determination unit 371 compares the created first inspection result with a threshold for the first inspection result stored in the memory 32. The first inspection determination unit 371 outputs the first inspection result including information on a comparison result (that is, whether the acquired first inspection result is acceptable or unacceptable for the bead appearance inspection) to the second inspection determination unit 372 to the Nth inspection determination unit 37N.

The second inspection determination unit 372 to the Nth inspection determination unit 37N respectively execute the second inspection determination (that is, the bead appearance inspection of forming neural networks based on k = (N - 1) types of artificial intelligence and determining presence or absence of a welding failure based on AI targeting the input data related to the shape of the bead acquired by the sensor 4 or the input data after preprocessing the input data by the data processing unit 36), and inspect presence or absence of the perforation, pit, undercut, sputtering, and protrusion of the bead. The perforation, pit, undercut, sputtering, and protrusion of the bead are merely exemplified, and the defect type inspected by the Nth inspection determination unit 37N is not limited thereto. When it is determined that the welding failure of the corresponding type is detected, each of the second inspection determination unit 372 to the Nth inspection determination unit 37N specifies the position of the bead at which the welding failure is detected. Each of the second inspection determination unit 372 to the Nth inspection determination unit 37N determines presence or absence of a welding failure using a learning model (AI) obtained in advance by a learning process for each type of welding failure or each group of types of welding failure. Accordingly, each of the second inspection determination unit 372 to the Nth inspection determination unit 37N can inspect, for example, the presence or absence of the perforation, pit, undercut, sputtering, and protrusion of the bead with high accuracy. Each of the second inspection determination unit 372 to the Nth inspection determination unit 37N does not execute the inspection on the shape reliability of the bead, the bead crack, and the bead positional deviation executed by the first inspection determination unit 371. The second inspection determination unit 372 to the Nth inspection determination unit 37N calculate an inspection result (in other words, an inspection score indicating an occurrence probability) of the perforation, pit, undercut, sputtering, and protrusion of the bead, and create a calculated value of the inspection score as a second inspection determination result.

The inspection result determination unit 37 may determine whether the repair welding by the welding robot MC1 is possible (in other words, whether the repair welding by the welding robot MC1 is favorable or manual repair welding is favorable) based on the inspection result (inspection score) included in the first inspection result or the second inspection result described above, and output a determination result included in the appearance inspection report described above.

The repair welding program creation unit 38 creates a repair welding program for the workpiece Wk to be executed by the welding robot MC1 by using the appearance inspection report of the workpiece Wk by the data processing unit 36. The repair welding program may include various parameters such as a welding current, a welding voltage, an offset amount, a welding speed, and a posture of the welding torch 400 for controlling the power supply device 500, the manipulator 200, the wire feeding device 300, the welding torch 400, and the like during the execution of the repair welding. The generated repair welding program may be stored in the processor 31, may be stored in the RAM of the memory 32, or may be transmitted to the host device 1 or the robot control device 2 via the communication unit 30 in association with the appearance inspection report.

The repair welding program creation unit 38 creates a repair welding program of the workpiece Wk (for example, a workpiece or a repair workpiece) to be executed by the welding robot MC1 using the appearance inspection report of the workpiece Wk (for example, a workpiece or a repair workpiece) by the inspection result determination unit 37 and the workpiece information (for example, information such as coordinates indicating a position of a detection point of a welding failure of the workpiece or the repair workpiece). The repair welding program may include various parameters such as a welding current, a welding voltage, an offset amount, a welding speed, and a posture of the welding torch 400 for controlling the power supply device 500, the manipulator 200, the wire feeding device 300, the welding torch 400, and the like during the execution of the repair welding. The generated repair welding program may be stored in the processor 31 or in the RAM in the memory 32.

The sensor 4 is, for example, a three-dimensional shape sensor, is attached to a distal end of the welding robot MC1, and acquires a plurality of pieces of point cloud data capable of specifying a shape of the workpiece Wk or a welding part on the workpiece Wk. The sensor 4 generates point cloud data capable of specifying the three-dimensional shape of the welding part based on the acquired point cloud data, and transmits the point cloud data to the inspection control device 3. When the sensor 4 is not attached to the distal end of the welding robot MC1 and is disposed separately from the welding robot MC1, the sensor 4 may include a laser light source (not shown) configured to scan the workpiece Wk or a welding part on the workpiece Wk (for example, a workpiece or a repair workpiece) based on the position information of the workpiece Wk or the welding part transmitted from the inspection control device 3, and a camera (not shown) that is disposed in a manner of capable of imaging an imaging region including a periphery of the workpiece Wk or the welding part and that images a reflection trajectory (that is, a shape line of the welding part) of reflected laser light among laser light emitted onto the workpiece Wk or the welding part. In this case, the sensor 4 transmits, to the inspection control device 3, the shape data of the workpiece Wk or the welding part (in other words, the image data of the workpiece Wk or the bead) based on the laser light imaged by the camera. The camera described above includes at least a lens (not shown) and an image sensor (not shown). The image sensor is, for example, a solid-state imaging device such as a charge coupled device (CCD) or a complementary metal oxide semi-conductor (CMOS), and converts an optical image formed on an imaging surface into an electrical signal.

The offline teaching device 5 is connected to the robot control device 2, the inspection control device 3, the monitor MN3, and the input device UI3 so as to allow data communication therebetween. The offline teaching device 5 creates a welding operation teaching program and a scanning operation teaching program of the workpiece Wk based on the position information of the welding line and various kinds of data such as the position information of the welding line, the welding operation setting information, and the scanning operation setting information transmitted from the input device UI3. The offline teaching device 5 includes a communication unit 50, a processor 51, a memory 52, and an input and output unit 53.

Although the offline teaching device 5 according to Embodiment 1 is described as an example in which the welding operation teaching program and the scanning operation teaching program are created, the creation of the welding operation teaching program is not essential and may be omitted. The offline teaching device 5 includes the sensor 4, and may be capable of creating a scanning operation teaching program for a robot capable of executing a scanning operation (that is, bead appearance inspection) by the sensor 4.

The communication unit 50 is connected to the robot control device 2, the inspection control device 3, the input device UI3, and the monitor MN3 so as to allow data communication therebetween. The communication unit 50 transmits, to the robot control device 2, the created welding operation teaching program and the created scanning operation teaching program and various kinds of data (for example, welding line position information, welding operation setting information, scanning operation setting information, and workpiece information on the workpiece Wk) used for creating the welding operation teaching program and the scanning operation teaching program in association with each other.

The processor 51 is formed using, for example, a CPU or an FPGA, and executes various processes and controls in cooperation with the memory 52. Specifically, the processor 51 implements functions of a 3D calculation unit 54 and a program creation unit 55 by referring to the program stored in the memory 52 and executing the program.

The memory 52 includes, for example, a RAM as a work memory used when a process of the processor 51 is executed, and a ROM that stores a program defining the process of the processor 51. Data generated or acquired by the processor 51 is temporarily stored in the RAM. A program that defines processing of the processor 51 is written in the ROM. In addition, the memory 52 stores the welding operation teaching program, the scanning operation teaching program, and the workpiece information, which are created by the program creation unit 55, in association with one another.

The memory 52 stores welding line information, sensor information, and obstacle information. The welding line information is information indicating a welding line on the workpiece Wk on which welding is executed. The sensor information is information indicating a measurement region (for example, effective scanning regions VLD0 and VLD1) of the sensor 4 that measures an appearance shape of a bead formed on a workpiece based on the welding. The obstacle information is information including at least a position of the obstacle OBS disposed between the sensor 4 and the workpiece Wk. The obstacle information may include not only the position of the obstacle OBS but also information on a shape and a dimension of the obstacle.

The input and output unit 53 as an example of an input unit and an acquisition unit acquires the execution command, the 3D model of the workpiece Wk or the effective scanning region of the sensor 4, the welding operation setting information, and the scanning operation setting information, which are transmitted from the input device UI3, and the position information of the welding line transmitted from the robot control device 2, the inspection control device 3, or the input device UI3, and outputs the acquired information to the processor 51. In addition, the input and output unit 53 transmits, to the monitor MN3, an image in which the operation trajectory of the sensor 4 or the operation trajectory of the welding torch 400 is superimposed on an image of a virtual production facility (for example, a virtual welding robot, a virtual workpiece, or a virtual stage) generated by the 3D calculation unit 54 and an image of a virtual production facility transmitted from the offline teaching device 5.

The 3D calculation unit 54 as an example of a generation unit virtually forms a production facility necessary for executing the welding step and the appearance inspection step of the workpiece Wk based on, for example, the input data (that is, data of a three-dimensional shape) related to the shape of the workpiece Wk or the bead, the data of the 3D model of the workpiece Wk or the effective scanning region of the sensor 4, the workpiece information of the workpiece Wk, and the data related to a production facility (for example, position information of the stage STG or the robot information or the position information of the welding robot MC1). The 3D calculation unit 54 converts the data of the virtually formed production facility into image data, outputs the image data to the input and output unit 53, and displays the image data on the monitor MN3.

In addition, the 3D calculation unit 54 generates image data in which one or more teaching points included in the welding operation teaching program created by the program creation unit, the operation trajectory (specifically, an idle running section, a welding section, and the like) of the welding torch 400, and the like are virtually superimposed on the production facility. The 3D calculation unit 54 generates image data in which one or more teaching points included in the scanning operation teaching program created by the program creation unit, the operation trajectory of the sensor 4 (specifically, an operation trajectory indicating various operations such as an approach operation, a retraction operation, and an avoidance operation, an idle running section, a scanning section, and the like), and the like are virtually superimposed on the production facility. The 3D calculation unit 54 converts data of a virtual production facility on which data included in various teaching programs is superimposed into image data, outputs the image data to the input and output unit 53, and displays the image data on the monitor MN3. The 3D calculation unit 54 may generate image data in which the teaching points of the welding operation and the scanning operation, the operation trajectories of the welding torch 400 and the sensor 4 (specifically, an idle running section, a welding section, a scanning section, and the like), and the like are collectively superimposed on a virtual production facility based on the welding operation teaching program and the scanning operation teaching program.

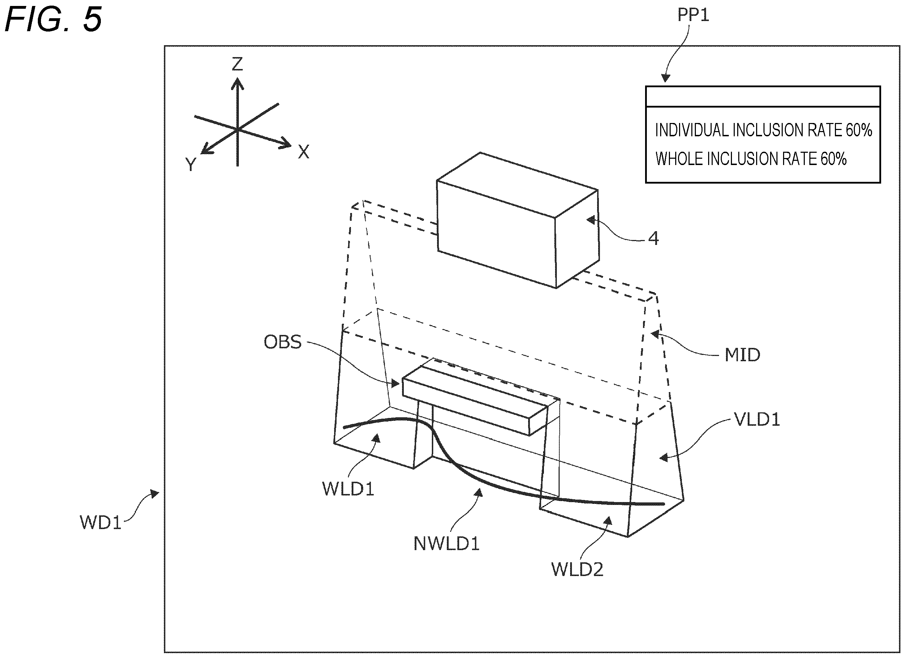

In addition, the 3D calculation unit 54 as an example of an acquisition unit acquires, from the memory 52, welding line information indicating a welding line (see FIG. 5) on the workpiece Wk on which welding is executed, sensor information indicating a measurement region (for example, the effective scanning region VLD0 illustrated in FIG. 3) of the sensor 4 that measures an appearance shape of a bead formed on the workpiece Wk based on the welding, and obstacle information including at least a position of the obstacle OBS disposed between the sensor 4 and the workpiece Wk.

In addition, the 3D calculation unit 54 as an example of a calculation unit calculates, based on the welding line information, the sensor information, and the obstacle information acquired from the memory 52, an inclusion rate (to be described later) indicating a rate of measurable welding lines (see FIG. 5) in which measurement of an appearance shape is not impossible due to the obstacle OBS during the measurement by the sensor 4, and transmits a calculation result of the inclusion rate to the input and output unit 53.

The program creation unit 55 creates a welding operation teaching program and a scanning operation teaching program based on the position information of the welding line (for example, the data of the 3D model of the workpiece Wk or the effective scanning region of the sensor 4, the input data related to the shape of the workpiece Wk or the bead, and coordinate information of a start point and an end point of the welding line), the welding operation setting information, and the scanning operation setting information. The program creation unit 55 includes a welding operation creation unit 551 and a scanning operation creation unit 552.

The welding operation creation unit 551 creates a welding operation teaching program for executing the welding step on the workpiece Wk based on the input position information of the welding line and the welding operation setting information. Here, the welding operation setting information may be various welding conditions of the welding, a group of various parameters necessary for the welding operation such as retreat positions of the welding torch 400 before the start of welding and after the end of welding.

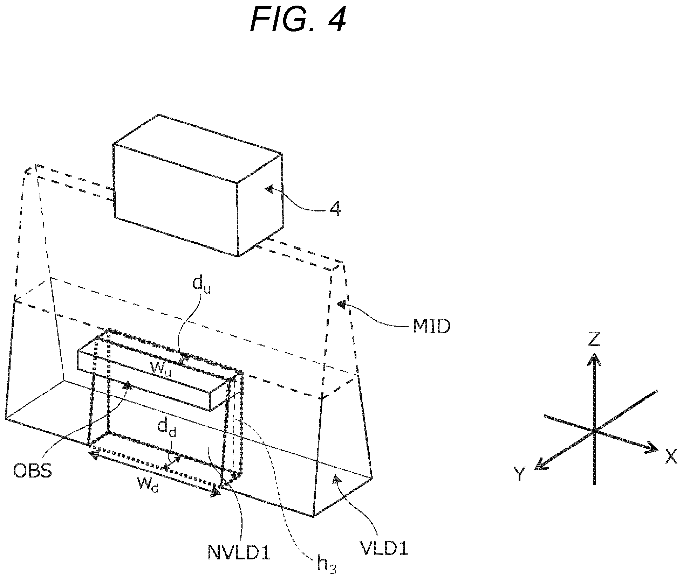

The scanning operation creation unit 552 creates a scanning operation teaching program for executing an appearance inspection step on the bead or another appearance inspection portion formed on the workpiece Wk, based on the input operation trajectory of the welding operation, position information of the welding line (welding line information) indicating a range where welding is executed on the surface of the workpiece Wk, the 3D model, one or more effective scanning regions disposed on the 3D model, the scanning operation setting information, and the like. In addition, the scanning operation setting information referred to herein may be a group of various parameters necessary for the scanning operation on a bead or other appearance inspection targets, such as a distance (see FIG. 3) between the sensor 4 and the workpiece Wk, sensor information related to a specification of the sensor 4 (for example, the effective scanning regions VLD0 (see FIG. 3) and VLD1 (see FIG. 4) corresponding to a measurement region of a scan (a cross section SEC shown in FIG. 3) and a measurement region of the sensor 4), a measuring range, approach information (for example, information of an approach start position and an approach end position or instruction information for commanding an approach), a scanning run-up section, a scanning section, retraction information (for example, information of a retraction start position and a retraction end position, or instruction information for commanding retraction), avoidance information (for example, information of an avoidance start position and an avoidance end position, position information of a workpiece, a jig or the like which is an obstacle to be avoided). The scanning operation creation unit 552 may create a scanning operation teaching program by referring to the obstacle information including at least the position of the obstacle OBS in addition to the input operation trajectory of the welding operation, position information of the welding line (welding line information), the 3D model, one or more effective scanning regions disposed on the 3D model, and the scanning operation setting information (see above).

Next, the measurement region and the effective scanning region of the sensor 4 will be described with reference to FIGS. 3 and 4. FIG. 3 is a diagram showing an example of the effective scanning region of the sensor 4. FIG. 4 is a diagram showing an example of the effective scanning region of the sensor 4 when the obstacle OBS is disposed in the effective scanning region of the sensor 4 in FIG. 3. In the description of FIG. 4, the same components as those in FIG. 3 are denoted by the same reference numerals, and the description thereof will be simplified or omitted.

FIGS. 3 and 4 show an example in which a three-dimensional coordinate system (X, Y, Z) is virtually constructed in the offline teaching device 5, and the sensor 4 is virtually disposed in the three-dimensional coordinate system.

The sensor 4 can emit, for example, a linear laser beam (a laser beam) in an -Z direction. The light beam emitted from the sensor 4 is linear, and the sensor 4 can acquire, as a measurement result, two-dimensional information of a position on a linear sensor detection line LLRH and a height at the position. More specifically, the sensor 4 can acquire the two-dimensional information of a position on the sensor detection line LLRH and a height at the position for each predetermined pitch of a distance h₁ determined by the specification of the sensor 4. That is, when the sensor 4 stops at a position of a certain height, a measurement region of the sensor 4 at the stop position is a trapezoidal cross section SEC.

As shown in FIG. 3, the sensor 4 is moved along a scanning direction SCDR1 by the welding robot MC1 during the actual appearance inspection. Accordingly, the measurement region (in other words, the effective scanning region) of the sensor 4 is the effective scanning region VLD0 having a three-dimensional shape obtained by integrating an area of the cross section SEC having a two-dimensional trapezoidal shape by a movement distance of the sensor 4 along the scanning direction SCDR1.

A measurement range of the sensor 4 is determined according to the specification thereof. Therefore, the sensor 4 cannot perform measurement when an object is located too close to or far from the sensor 4. For example, in the examples of FIGS. 3 and 4, measurement of an object located within a distance less than a distance h₂ from the sensor 4 is not possible in terms of specifications, and an intermediate region MID in which measurement by the sensor 4 is not possible is provided with respected to the effective scanning region VLD0 in which measurement by the sensor 4 is possible. That is, in order to visualize an influence (for example, presence or absence of interference) of the obstacle OBS on a path of the light beam (in other words, the effective scanning region), it is necessary to consider not only the effective scanning region but also interference between the above-described intermediate region MID (that is, a region outside the effective scanning region between the sensor 4 and the effective scanning region VLD0) and the obstacle OBS.

As shown in FIG. 4, when an obstacle OBS (for example, a jig or another workpiece) is disposed between the sensor 4 and the workpiece Wk, a measurement region (in other words, an effective scanning region) of the sensor 4 decreases. That is, the net effective scanning region VLD1 is a region having a volume obtained by reducing a volume of the region NVLD1 shown in FIG. 4 from a volume of the effective scanning region VLD0 having a trapezoidal columnar shape shown in FIG. 3. The region NVLD1 is a region where measurement by the sensor 4 is not possible due to interference between the effective scanning region VLD0 of the sensor 4 and the obstacle OBS.

For example, it is assumed that a rectangular obstacle OBS having a width Wᵤ in an X direction overlaps the effective scanning region VLD0 by a length dᵤ in a Y direction at a position of a height h₃ from a wide bottom surface of the effective scanning region VLDO, and interference occurs between the effective scanning region VLD0 of the sensor 4 and the obstacle OBS. At this time, a volume of the region NVLD1 described above can be geometrically calculated by the 3D calculation unit 54 based on the height h₃, the length dᵤ, and the width Wᵤ, and the length d_{d} in the Y direction and the width W_{d} in the X direction of a rectangular portion, which is a shadow of the obstacle OBS in the wide bottom surface of the effective scanning region VLD0.

Here, the 3D calculation unit 54 can specify the height h₃, the length dᵤ, and the width Wᵤ from the obstacle information including at least the position of the obstacle OBS. Similarly, the 3D calculation unit 54 can calculate the length d_{d} and the width W_{d} of the rectangular portion, which is the shadow of the obstacle OBS in the wide bottom surface of the effective scanning region VLDO, from the sensor information (for example, the volume of the effective scanning region VLD0) and the obstacle information.

The length dᵤ indicates a length (an interference length) in the Y direction in which measurement by the sensor 4 is not possible by the obstacle OBS on a narrow upper surface (an upper side in the Z direction) of the effective scanning region VLD0. The width W_{d} indicates a width (an interference length) in the X direction in which measurement by the sensor 4 is not possible by the obstacle OBS on the narrow upper surface (the upper side in the Z direction) of the effective scanning region VLD0. The height h₃ indicates a height from a wide bottom surface (a lower side in the Z direction) of the effective scanning region VLD0 when the obstacle OBS is disposed to overlap the effective scanning region VLD0 of the sensor 4. The height h₃ may be the same as the height h₁ (see FIG. 3).

The length d_{d} indicates a length (an interference length) in the Y direction in which measurement by the sensor 4 is not possible by the obstacle OBS on the wide bottom surface (the lower side in the Z direction) of the effective scanning region VLD0. The width W_{d} indicates a width (an interference length) in the X direction in which measurement by the sensor 4 is not possible by the obstacle OBS on the wide bottom surface (the lower side in the Z direction) of the effective scanning region VLD0.

The 3D calculation unit 54 calculates an inclusion rate (see above) based on an expression of " 100 * (volume of effective scanning region VLD1/volume of effective scanning region VLDO)", where the sign "*" shows an operator indicating multiplication. Here, the inclusion rate indicates a rate of a length of a measurable welding line (see FIG. 5) in which measurement of an appearance shape of a bead (in other words, a welding line) by the sensor 4 is not impossible due to the reduction of the effective scanning region of the sensor 4 based on the obstacle OBS being disposed in a region between the sensor 4 and the workpiece Wk (for example, the effective scanning region VLDO, the intermediate region MID, or a region extending over both the effective scanning region VLD0 and the intermediate region MID) to a length of a welding line, which is an appearance inspection target in a case where the obstacle OBS is not disposed.

Although the appearance inspection target is a bead formed on the surface of the workpiece Wk by welding, attention is paid to the fact that the bead is originally formed following a welding line indicating a trajectory of the welding torch 400 (see FIG. 2) coming into contact with the surface of the workpiece Wk during the welding step. Here, the inclusion rate can be calculated as a ratio (rate) of a length of a measurable welding line and a length of a welding line, which is an appearance inspection target in a case where the obstacle OBS is not disposed.

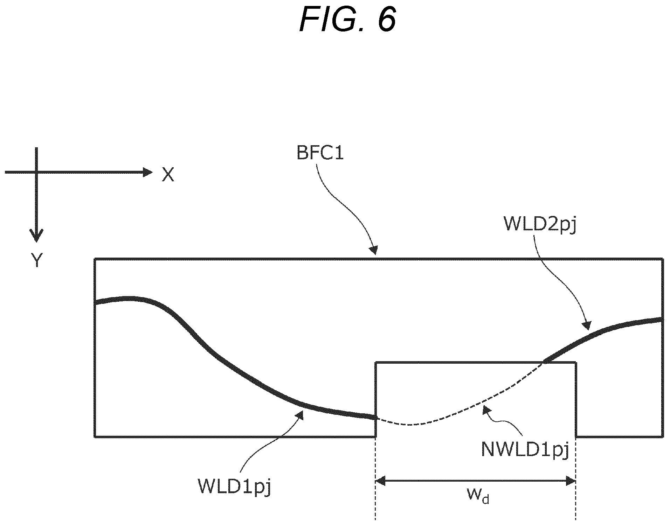

Next, an effective scanning region screen WD1 displayed on the monitor MN3 connected to the offline teaching device 5 will be described with reference to FIGS. 5 and 6. FIG. 5 is a diagram showing a first example of the effective scanning region screen WD1. FIG. 6 is a diagram showing an XY projection plane of the effective scanning region VLD1 in FIG. 5. The effective scanning region screen WD1 is created by the processor 51 of the offline teaching device 5 and displayed on the monitor MN3. In the description of FIGS. 5 and 6, the same components as those in FIGS. 3 and 4 are denoted by the same reference numerals, and the description thereof will be simplified or omitted.

As shown in FIG. 5, the effective scanning region screen WD1 displays at least a three-dimensional coordinate system virtually constructed by the processor 51 of the offline teaching device 5, a welding line of welding performed on a workpiece (not shown), the sensor 4 disposed in the three-dimensional coordinate system, an obstacle OBS disposed between the sensor 4 and a surface of the workpiece (not shown), an effective scanning region VLD1 of the sensor 4 and an intermediate region MID, and an inclusion rate display column PP1. The sensor 4, the obstacle OBS, the effective scanning region VLD1, and the intermediate region MID are the same as those shown in FIG. 4, for example.

In order to visually display to the user (for example, an operator who creates a scanning operation teaching program) that the measurement range of the sensor 4 is reduced due to the obstacle OBS, the processor 51 of the offline teaching device 5 may display the effective scanning region VLD1 on the effective scanning region screen WD1, or may project and display a shadow on a surface of a workpiece (not shown) corresponding to a reduced portion (see FIG. 4) of the effective scanning region of the sensor 4 due to the obstacle OBS.

Here, in the teaching of the scanning operation by the sensor 4, the interference between the path of the light beam (for example, laser light) emitted from the sensor 4 and the obstacle OBS does not directly affect a result of the appearance inspection, and a problem occurs when a target portion (for example, a bead or a welding line) of the appearance inspection cannot be correctly measured due to the occurrence of the interference.

Here, in the offline teaching device 5, the processor 51 (for example, the 3D calculation unit 54) acquires, from the memory 52, the welding line information indicating a position of a welding line of the welding performed on the workpiece (not shown), the sensor information including the information of the effective scanning region VLD0 of the sensor 4, and the obstacle information including the position of the obstacle OBS, and displays welding lines WLD1 and WLD2 and a welding line NWLD1 in a distinguishable manner using the welding line information, the sensor information, and the obstacle information. The welding line includes welding lines WLD1 and WLD2 that can be measured by the sensor 4 (that is, included in the effective scanning region VLD1) without being affected by interference due to the obstacle OBS, and the welding line NWLD1 that is affected by the interference due to the obstacle OBS and cannot be measured by the sensor 4 (that is, not included in the effective scanning region VLD1).

For example, the processor 51 displays the welding lines WLD1 and WLD2 in blue such that measurement by the sensor 4 is possible, and displays the welding line NWLD1 in red such that measurement by the sensor 4 is impossible. Alternatively, the processor 51 displays the welding lines WLD1 and WLD2 with a thick solid line such that measurement by the sensor 4 is possible, and displays the welding line NWLD1 with a thin broken line such that measurement by the sensor 4 is impossible (see FIG. 6). The thick solid line and the thin broken line are merely examples of a display form, and the display form is not limited thereto. In FIG. 5, the effective scanning region VLD1 of the sensor 4 includes the welding lines WLD1 and WLD2 so as to be located slightly above a bottom surface of the effective scanning region VLD1. The effective scanning region VLD1 may include the welding lines WLD1 and WLD2 so as to be in contact with the bottom surface of the effective scanning region VLD1, or may include the welding lines WLD 1 and WLD2 so as to be slightly floated from the bottom surface of the effective scanning region VLD1 as shown in FIG. 5.

As shown in FIG. 6, the wide bottom surface BFC1 is a bottom surface on a side in contact with a surface of a workpiece (not shown) when the effective scanning region VLD1 of the sensor 4 is viewed in the - Z direction in the XY plane. Projected welding lines WLDlpj and WLD2pj (see FIG. 6) obtained by projecting the welding lines WLD1 and WLD2 (see FIG. 5) onto the XY plane are included in the effective scanning region VLD1 of the sensor 4, and specifically, are located on the wide bottom surface BFC1 of the effective scanning region VLD1. The projected welding line NWLDlpj obtained by projecting the welding line NWLD1 (see FIG. 5) onto the XY plane is disposed outside the effective scanning region VLD1 of the sensor 4.

The inclusion rate display column PP1 is, for example, a sub-screen indicating calculation results of an individual inclusion rate and a whole inclusion rate by the 3D calculation unit 54 of the processor 51. The individual inclusion rate indicates a rate of a welding line included in the effective scanning region VLD1 of one sensor 4 (in other words, a measurable welding line in which measurement of appearance shape is not impossible due to the obstacle OBS during the measurement by the sensor 4) to an entire length of a welding line originally scheduled in the welding step. That is, the individual inclusion rate indicates to what extent a scanning operation by a certain sensor 4 includes a bead (a welding line) targeted for the scanning operation. On the other hand, the whole inclusion rate indicates an additional result of the individual inclusion rates calculated corresponding to the respective effective scanning regions when the effective scanning regions corresponding to the respective scanning operations are provided on the assumption that a plurality of scanning operations are performed, for example, by disposing a single sensor while changing an orientation. That is, the whole inclusion rate indicates how much a bead (a welding line) targeted for each scanning operation is included in the scanning operation from different directions depending on the planned single sensor. In the example of FIG. 5, the individual inclusion rate and the whole inclusion rate are results calculated by the 3D calculation unit 54 according to the definition described above. There is only one scanning operation by the sensor 4, and the individual inclusion rate and the whole inclusion rate have the same value.

What is particularly important in the appearance inspection is that the entire welding line is inspected as little as possible. Therefore, the whole inclusion rate is more effective and appropriate than the individual inclusion rate as an index for determining whether the teaching of the scanning operation is completed. In order to improve the whole inclusion rate, it is effective to add a new scanning operation and increase a total sum of the effective scanning regions which are net measurement ranges. Since the time of appearance inspection also increases, the individual inclusion rate is preferably as high as possible.

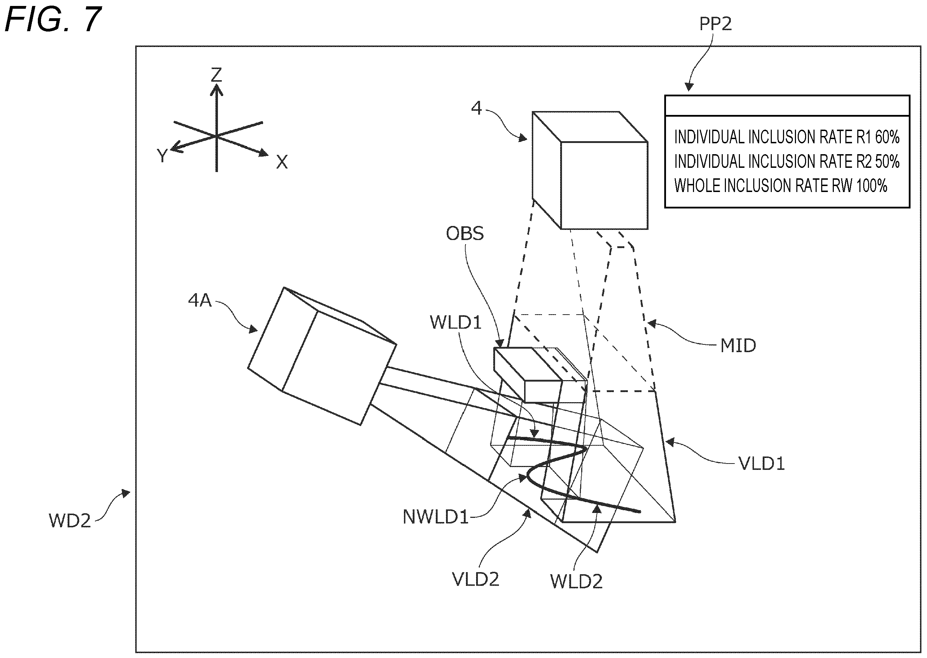

FIG. 7 is a diagram showing a second example of an effective scanning region screen WD2. Similar to the effective scanning region screen WD1, the effective scanning region screen WD2 is created by the processor 51 of the offline teaching device 5 and displayed on the monitor MN3. In the description of FIG. 7, the same components as those in FIGS. 3 and 4 or 5 are denoted by the same reference numerals, and the description thereof will be simplified or omitted.

As shown in FIG. 7, the effective scanning region screen WD2 displays at least a three-dimensional coordinate system virtually constructed by the processor 51 of the offline teaching device 5, a welding line of welding performed on a workpiece (not shown), the sensors 4 and 4A disposed in the three-dimensional coordinate system, an obstacle OBS disposed between the sensor 4 and a surface of the workpiece (not shown), an effective scanning region VLD1 of the sensor 4 and an intermediate region MID, an effective scanning region VLD2 of a sensor 4A and an intermediate region, and an inclusion rate display column PP2. The sensor 4A is a sensor at a position where the same sensor 4 is virtually disposed by changing an orientation (for example, to emit the laser beam toward the XY plane from an oblique direction) such that an emission direction of the laser beam is different from an arrangement position at which the emission direction is parallel to the - Z direction. That is, the reference numerals of the sensor 4 and the sensor 4A are different in order to distinguish positions where the same sensor is virtually disposed in the three-dimensional coordinate system. The sensor 4, the obstacle OBS, the effective scanning region VLD1, the intermediate region MID, the welding lines WLD1 and WLD2, and the welding line NWLD1 are the same as those shown in FIG. 4 or FIG. 5, for example.

FIG. 7 shows an example in which a new scanning operation in a case where the sensor 4 is disposed at a position of the sensor 4A is added in order to improve the whole inclusion rate unlike FIG. 5. Specifically, an individual inclusion rate R1 calculated corresponding to the scanning operation by the sensor 4 shown in FIG. 5 is 60%, and an individual inclusion rate R2 calculated corresponding to the new scanning operation in the case where the sensor 4 is disposed at the position of the sensor 4A shown in FIG. 7 is 50%. That is, in the scanning operation by the sensor 4, only 60% of the entire length of the welding line is included as the appearance inspection target, and in the scanning operation in the case where the sensor 4 is disposed at the position of the sensor 4A, only 50% of the entire length of the welding line is included as the appearance inspection target.

For example, when it is found that the welding line NWLD1 (that is, a welding line of a portion which is not included in the scanning operation by the sensor 4) is included in the new scanning operation in the case where the sensor 4 is disposed at the position of the sensor 4A as a calculation result of the 3D calculation unit 54, the 3D calculation unit 54 can calculate a "whole inclusion rate = 100%" indicating that the entire length of the welding line to be originally welded is included by performing the respective scanning operations according to the positions of the sensors 4 and 4A, in consideration of the individual inclusion rate R1 and the individual inclusion rate R2. Visual information of an effective scanning region or a welding line based on a scanning operation depending on the positions of the sensors 4 and 4A is preferably dynamically changed in accordance with teaching or setting change of the scanning operation. Using the offline teaching device 5, the user can create an optimum scanning operation teaching program with reference to the visual information.

### (Operation of Offline Teaching Device)

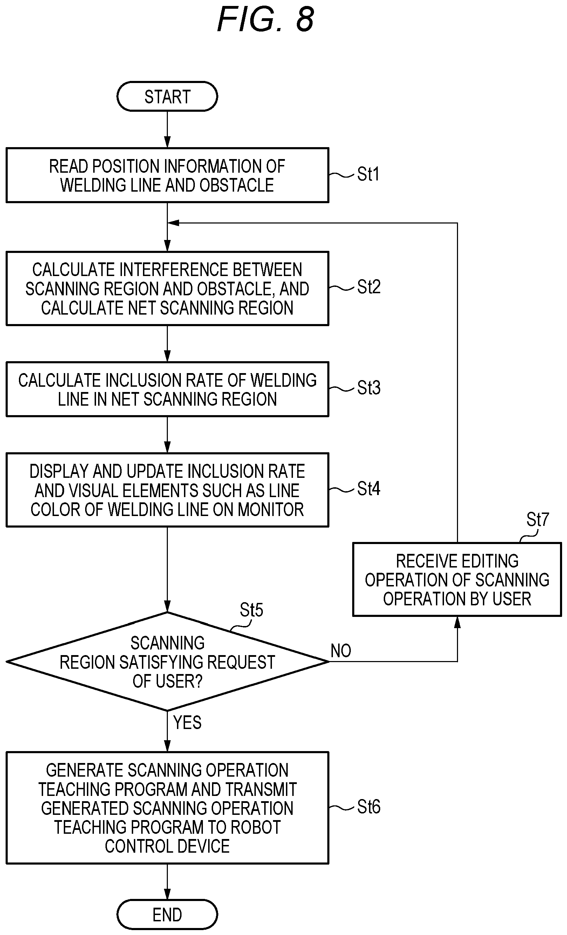

Next, an operation procedure for visually displaying an influence of interference caused by the obstacle OBS by the offline teaching device 5 will be described with reference to FIG. 8. FIG. 8 is a flowchart showing an operation procedure of the offline teaching device 5 according to Embodiment 1. Each process (step) shown in FIG. 8 is mainly executed by the processor 51 of the offline teaching device 5.

In FIG. 8, the processor 51 reads out and acquires the sensor information, the welding line information, and the obstacle information (all of which are described above) from the memory 52 (St1), constructs a virtual three-dimensional coordinate system using various kinds of information, disposes the sensor 4, a welding line, a workpiece (not shown), and the obstacle OBS in the three-dimensional coordinate system, and displays the sensor 4, the welding line, the workpiece (not shown), and the obstacle OBS on the effective scanning region screens WD1 and WD2 (see FIG. 4 or FIG. 5). The processor 51 geometrically calculates the degree of interference between a scanning region of the scanning operation by the sensor 4 and the obstacle OBS (for example, a volume of a portion where the effective scanning region VLD0 and the obstacle OBS three-dimensionally overlap each other), and calculates the effective scanning region VLD1 which is a net scanning region (St2).

The processor 51 calculates an inclusion rate (an individual inclusion rate and a whole inclusion rate) of a welding line in the effective scanning region VLD1 (that is, a welding line included in the effective scanning region VLD1) using a calculation result in step St2 (St3). The processor 51 displays the inclusion rate display columns PP1 and PP2 in the effective scanning region screens WD1 and WD2 using the calculation result of the inclusion rate, and further visually displays a portion included in the effective scanning region VLD1 and a portion not included in the effective scanning region VLD1 of a virtually disposed welding line in a distinguishable manner (for example, a line type or a line color), or updates the display (St4).

Here, a user confirms the contents of the effective scanning region screen displayed in step St4, and a determination result as to whether a request of a user (for example, the effective scanning region by the sensor 4) is satisfied in the effective scanning region of the sensor 4 based on a positional relation with the obstacle OBS fixedly disposed is input (St5). When an input indicating that the request of the user is satisfied is made (St5, YES), the processor 51 generates a scanning operation teaching program based on the effective scanning region VLD1 of the sensor 4 which is virtually disposed at present, and transmits the generated scanning operation teaching program to the robot control device 2 (St6).

On the other hand, when the input indicating that the request of the user is satisfied is not made (St5, NO), the processor 51 receives an editing operation (for example, division, movement, deletion, or the like of a scanning section of the sensor 4 associated with the scanning operation) of the scanning operation by the user for the effective scanning region VLD1 of the sensor 4 which is virtually disposed at present, generates an effective scanning region by the sensor 4 based on the editing operation (St7), and disposes the effective scanning region in the three-dimensional coordinate system. Thereafter, the process of the processor 51 returns to step St2. That is, the processor 51 geometrically calculates the degree of interference with the obstacle OBS (for example, a volume of a portion where the effective scanning region after the editing operation and the obstacle OBS three-dimensionally overlap each other) with respect to a new effective scanning region corrected by the editing operation, and calculates the effective scanning region VLD1 which is a net scanning region (St2).

As described above, the offline teaching device 5 according to the embodiment 1 includes: an acquisition unit (for example, a 3D calculation unit) that acquires welding line information indicating welding lines on the workpiece Wk on which welding is executed, sensor information indicating a measurement region (for example, the effective scanning region VLD0) of the sensor 4 that measures an appearance shape of a bead formed on the workpiece Wk based on welding, and obstacle information including at least a position of the obstacle OBS disposed between the sensor 4 and the workpiece Wk; a calculation unit (for example, a 3D calculation unit) that calculates, based on the welding line information, the sensor information, and the obstacle information, an inclusion rate indicating a rate of measurable welding lines (for example, the welding lines WLD1 and WLD2) in which measurement of the appearance shape is not impossible due to the obstacle OBS during the measurement by the sensor 4; and an output unit (for example, the input and output unit 53) that generates a calculation result of the inclusion rate and outputs the calculation result to a screen (for example, the effective scanning region screen WD1).

Accordingly, when the obstacle OBS is disposed in a scanning region (for example, the effective scanning region VLDO) of the sensor 4 executed by the welding robot MC1, the offline teaching device 5 can visualize interference between the scanning region and the obstacle OBS (for example, interference between the path of the light beam from the sensor 4 and the obstacle OBS). Accordingly, the offline teaching device 5 can support teaching of an appropriate scanning operation of the sensor 4 for the appearance inspection in the offline by the user.

The measurement region has a three-dimensional shape (for example, a trapezoidal column) formed based on a scanning distance of the sensor 4 during the measurement (see FIG. 3). The calculation unit (for example, the 3D calculation unit 54) specifies an effective measurement region (for example, the effective scanning region VLD1) based on the overlap between the measurement region and the obstacle OBS, and calculates an inclusion rate based on the effective measurement region and the welding line information. Accordingly, the offline teaching device 5 can determine how much a welding line cannot be measured during the appearance inspection due to interference between the obstacle OBS and the path of the light beam from the sensor 4.

An output unit (for example, the input and output unit 53) outputs a calculated value of the inclusion rate to a screen (for example, the effective scanning region screen WD1). Accordingly, the user can visually recognize how much the welding line cannot be measured during the appearance inspection due to interference between the obstacle OBS and the path of the light beam from the sensor 4.

In addition, the output unit (for example, the input and output unit 53) outputs, to a screen (for example, the effective scanning region screen WD1) in a distinguishable manner, a first welding line (for example, the welding line WLD1 and the welding line WLD2) located within an effective measurement region (for example, the effective scanning region VLD1) and a second welding line (for example, the welding line NWLD1) located outside the effective measurement region among the welding lines. Accordingly, the user can visually recognize which part of the welding line cannot be subjected to the appearance inspection due to interference between the obstacle OBS and the path of the light beam from the sensor 4.

The measurement region of the sensor includes at least a first measurement region (for example, the effective scanning region VLD1) according to a first arrangement position of the sensor 4 (for example, the position of the sensor 4 shown in FIG. 7) and a second measurement region (for example, the effective scanning region VLD2) according to a second arrangement position of the sensor 4 (for example, the position of the sensor 4A shown in FIG. 7). The calculation unit (for example, the 3D calculation unit 54) calculates a first inclusion rate (for example, the individual inclusion rate R1) indicating a rate of a first measurable welding line (for example, the welding line WLD1 and the welding line WLD2) in which measurement of the appearance shape is not impossible due to the obstacle OBS during measurement in the first measurement region, a second inclusion rate (for example, the individual inclusion rate R2) indicating a rate of a second measurable welding line (for example, the welding line NWLD1) in which measurement of the appearance shape is not impossible due to the obstacle OBS during measurement in the second measurement region, and a whole inclusion rate RW indicating a ratio of a sum of the first measurable welding line and the second measurable welding line to the welding line. Accordingly, the offline teaching device 5 can individually or comprehensively determine how much the welding line cannot be measured at the time of the appearance inspection due to interference between the obstacle OBS and the paths of the light beams from the sensors 4 and 4A by combining the respective effective scanning regions by the sensors starting from the positions when the sensors are virtually disposed at different positions.

The output unit (for example, the input and output unit 53) outputs, to a screen (for example, the effective scanning region screen WD2), the first inclusion rate (for example, the individual inclusion rate R1), the second inclusion rate (for example, the individual inclusion rate R2), and the whole inclusion rate RW as a calculation result of an inclusion rate. Accordingly, the user can individually or comprehensively and visually recognize an influence on how much the welding line cannot be measured during the appearance inspection due to interference between the obstacle OBS and the paths of the light beams from the sensors 4 and 4A.

An offline teaching device according to Embodiment 1 is performed using the offline teaching device 5 including one or more computers, the offline teaching method includes: inputting, to the computer, welding line information indicating welding lines on a workpiece on which welding is executed; inputting, to the computer, sensor information indicating a measurement region of a sensor that measures an appearance shape of a bead formed on the workpiece based on the welding; inputting, to the computer, obstacle information including at least a position of the obstacle OBS disposed between the sensor 4 and the workpiece Wk; and generating, based on the welding line information, the sensor information, and the obstacle information, a calculation result of an inclusion rate indicating a rate of measurable welding lines in which measurement of the appearance shape is not impossible due to the obstacle during the measurement by the sensor 4, and outputting the calculation result to a screen. Accordingly, by using the offline teaching device 5, the user can support teaching of an appropriate scanning operation of the sensor 4 for appearance inspection in the offline, and convenience for the user is improved.

Although various embodiments are described above with reference to the drawings, it is needless to say that the present disclosure is not limited to such examples. It is apparent to those skilled in the art that various changes, corrections, substitutions, additions, deletions, and equivalents can be conceived within the scope of the claims, and it should be understood that such changes, corrections, substitutions, additions, deletions, and equivalents also fall within the technical scope of the present disclosure. In addition, components in the various embodiments described above may be combined freely in a range without deviating from the spirit of the disclosure.

The present application is based on Japanese Patent Application No. 2021-199680 filed on December 8, 2021, and the contents of which are incorporated herein by reference.

### INDUSTRIAL APPLICABILITY

The present disclosure is useful as an offline teaching device and an offline teaching method that visualize interference between a scanning region of a sensor performed by a welding robot and an obstacle when the obstacle is disposed in the scanning region and support teaching of an appropriate scanning operation.

### REFERENCE SIGNS LIST

1: host device
2: robot control device
3: inspection control device
4: sensor
5: offline teaching device
10, 20, 30, 50: communication unit
11, 21, 31, 51: processor
12, 22, 32, 52: memory
53: input and output unit
54: 3D calculation unit
55: program creation unit
551: welding operation creation unit
552: scanning operation creation unit
100: welding system
200: manipulator
300: wire feeding device
301: welding wire
400: welding torch
500: power supply device
MC1: welding robot
MN1, MN2, MN3: monitor
Wk: workpiece

## Claims

1. An offline teaching device comprising:
an acquisition unit configured to acquire welding line information indicating welding lines on a workpiece on which welding is executed, sensor information indicating a measurement region of a sensor that measures an appearance shape of a bead formed on the workpiece based on the welding, and obstacle information including at least a position of an obstacle disposed between the sensor and the workpiece;
a calculation unit configured to calculate an inclusion rate indicating a rate of measurable welding line in which measurement of the appearance shape is not impossible due to the obstacle during the measurement by the sensor, based on the welding line information, the sensor information, and the obstacle information; and
an output unit configured to generate a calculation result of the inclusion rate and output the calculation result to a screen.

2. The offline teaching device according to claim 1, wherein
the measurement region has a three-dimensional shape formed based on a scanning distance of the sensor during the measurement, and
the calculation unit specifies an effective measurement region based on an overlap between the measurement region and the obstacle, and calculates the inclusion rate based on the effective measurement region and the welding line information.

3. The offline teaching device according to claim 2, wherein
the output unit outputs a calculated value of the inclusion rate to the screen.

4. The offline teaching device according to claim 2, wherein
the output unit outputs a first welding line and a second welding line of the welding lines to the screen in a distinguishable manner, the first welding line being located within the effective measurement region, and the second welding line being located outside the effective measurement region.

5. The offline teaching device according to claim 1, wherein
the measurement region of the sensor includes at least a first measurement region based on a first arrangement position of the sensor and a second measurement region based on a second arrangement position of the sensor different from the first measurement region, and
the calculation unit calculates a first inclusion rate indicating a rate of a first measurable welding line in which the measurement of the appearance shape is not impossible due to the obstacle during the measurement in the first measurement region, a second inclusion rate indicating a rate of a second measurable welding line in which the measurement of the appearance shape is not impossible due to the obstacle during the measurement in the second measurement region, and a whole inclusion rate indicating a ratio of a sum of the first measurable welding line and the second measurable welding line to the welding lines.

6. The offline teaching device according to claim 5, wherein
the output unit outputs the first inclusion rate, the second inclusion rate, and the whole inclusion rate to the screen as the calculation result of the inclusion rate.

7. An offline teaching method performed by an offline teaching device including one or more computers, the offline teaching method comprising:
acquiring welding line information indicating welding lines on a workpiece on which welding is executed, sensor information indicating a measurement region of a sensor that measures an appearance shape of a bead formed on the workpiece based on the welding, and obstacle information including at least a position of an obstacle disposed between the sensor and the workpiece;
calculating an inclusion rate indicating a rate of a measurable welding line in which measurement of the appearance shape is not impossible due to the obstacle during the measurement by the sensor, based on the welding line information, the sensor information, and the obstacle information; and
generating a calculation result of the inclusion rate and outputting the calculation result to a screen.

8. An offline teaching method performed by an offline teaching device including one or more computers, the offline teaching method comprising:
inputting welding line information to the computer, the welding line information indicating welding lines on a workpiece on which welding is executed;
inputting sensor information to the computer, the sensor information indicating a measurement region of a sensor that measures an appearance shape of a bead formed on the workpiece based on the welding;
inputting obstacle information to the computer, the obstacle information including at least a position of an obstacle disposed between the sensor and the workpiece; and
generating a calculation result of an inclusion rate indicating a rate of measurable welding lines in which measurement of the appearance shape is not impossible due to the obstacle during the measurement by the sensor, based on the welding line information, the sensor information, and the obstacle information, and outputting the calculation result to a screen.
